(19) Europäisches Patentamt / European Patent Office / Office européen des brevets

(11) **EP 4 085 486 B1**

(12) **EUROPEAN PATENT SPECIFICATION**

(45) Date of publication and mention of the grant of the patent:
**26.03.2025 Bulletin 2025/13**

(21) Application number: **22714625.5**

(22) Date of filing: **18.03.2022**

(51) International Patent Classification (IPC):
*H01M 4/58* (2010.01)    *H01M 4/62* (2006.01)
*H01M 4/66* (2006.01)    *H01M 4/131* (2010.01)
*H01M 4/36* (2006.01)    *H01M 4/02* (2006.01)

(52) Cooperative Patent Classification (CPC):
**H01M 4/625; H01M 4/131; H01M 4/366;**
**H01M 4/5825; H01M 4/661; H01M 4/663;**
**H01M 4/667;** H01M 2004/021; H01M 2004/028;
Y02E 60/10

(86) International application number:
**PCT/JP2022/012815**

(87) International publication number:
**WO 2022/196814 (22.09.2022 Gazette 2022/38)**

(54) **POSITIVE ELECTRODE FOR NON-AQUEOUS ELECTROLYTE SECONDARY BATTERY, AND NON-AQUEOUS ELECTROLYTE SECONDARY BATTERY, BATTERY MODULE AND BATTERY SYSTEM USING THE SAME**

POSITIVELEKTRODE FÜR EINE SEKUNDÄRBATTERIE MIT WASSERFREIEM ELEKTROLYT UND SEKUNDÄRBATTERIE MIT WASSERFREIEM ELEKTROLYT, BATTERIEMODUL UND BATTERIESYSTEM DAMIT

ÉLECTRODE POSITIVE POUR BATTERIE SECONDAIRE À ÉLECTROLYTE NON AQUEUX, ET BATTERIE SECONDAIRE À ÉLECTROLYTE NON AQUEUX, MODULE DE BATTERIE ET SYSTÈME DE BATTERIE L'UTILISANT

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **19.03.2021 JP 2021045804**
**19.03.2021 JP 2021046025**

(43) Date of publication of application:
**09.11.2022 Bulletin 2022/45**

(73) Proprietor: SEKISUI CHEMICAL CO., LTD.
**Osaka-shi
Osaka
530-8565 (JP)**

(72) Inventors:
• **YOSHIKAWA, Hikaru**
**Tsukuba-shi
Ibaraki
3004292 (JP)**
• **SABI, Yuichi**
**Tsukuba-shi
Ibaraki
3004292 (JP)**

(74) Representative: **Ter Meer Steinmeister & Partner**
**Patentanwälte mbB**
**Nymphenburger Straße 4**
**80335 München (DE)**

(56) References cited:
**EP-A1- 3 540 827        CN-A- 105 518 909**
**CN-A- 111 211 323       US-A1- 2019 280 295**

EP 4 085 486 B1

**Description**

**Technical Field**

The present invention relates to a positive electrode for non-aqueous electrolyte secondary battery, as well as a non-aqueous electrolyte secondary battery, a battery module, and a battery system, each using the positive electrode.
Priority is claimed on Japanese Patent Application Nos. 2021-045804 and 2021-046025, each filed March 19, 2021.

**Background Art**

A non-aqueous electrolyte secondary battery is generally composed of a positive electrode, a non-aqueous electrolyte, a negative electrode, and a separation membrane (separator) installed between the positive electrode and the negative electrode.
A conventionally known positive electrode for a non-aqueous electrolyte secondary battery is formed by fixing a composition composed of a positive electrode active material containing lithium ions, a conducting agent, and a binder to the surface of a metal foil (current collector).
Examples of the practically used positive electrode active material containing lithium ions include lithium transition metal composite oxides such as lithium cobalt oxide ($LiCoO_2$), lithium nickel oxide ($LiNiO_2$), and lithium manganese oxide ($LiMn_2O_4$ ), and lithium phosphate compounds such as lithium iron phosphate ($LiFePO_4$).
PLT 1 describes a positive electrode in which a positive electrode active material layer composed of a lithium phosphoric acid compound, a binder, and a conducting agent are provided on an aluminum foil. PLT 1 describes that cycling performance is improved by setting the specific ratio of the pores derived from the primary particles of the lithium phosphoric acid compound to the pores derived from the secondary particles of the lithium phosphoric acid compound, and setting specific range of porosity.
Among lithium phosphoric acid compounds, lithium iron phosphate has a high electrical resistance, therefore, performance improvement by lowering resistance is a problem to be solved.
NPL 1 reports that the battery capacity is improved by coating the surface of the iron phosphate-based active material with carbon.
Further, the non-aqueous electrolyte secondary battery is required to improve the battery performance at a low temperature. For example, PLT 2 describes a CCA determination method for determining the CCA value of the battery in the inspection. The inspection includes a step of calculating and storing a battery cold cranking amp (CCA) algorithm as a function of the battery internal resistance (IR), a step of measuring battery IR in the inspection, and a step of determining the CCA value of the battery in the inspection from the stored algorithm using the measured IR. PLT 2 tries to improve CCA by this method.
Documents CN105518909B and EP3540827A1 are also directed to improved positive active material layers for enhancing the cycling performance of secondary battereries.

**Citation List**

**Patent Literature**

PTL 1: Japanese Patent Application Unexamined Publication No. 2014-13748
PTL 2: Japanese Patent Application Unexamined Publication No. 2007-525354

**Non Patent Literature**

NPL 1: I.Belharouak, C.Johnson, K.Amine, Synthesis and electrochemical analysis of vapor-deposited carbon-coated LiFePO4, Electrochemistry Communications, Volume 7, Issue 10, October 2005, Pages 983-988

**Summary of Invention**

**Technical Problem**

These methods are not necessarily satisfactory, and further improvement of battery performance is required.
For addressing this issue, an object of the present invention is to provide a positive electrode for a non-aqueous electrolyte secondary battery, which can improve the performance of a non-aqueous electrolyte secondary battery in respect of high-rate cycling performance.

Further, the invention disclosed in PTL 2 cannot satisfy the demand for further improving the battery performance of the non-aqueous electrolyte secondary battery at a low temperature.

For addressing this issue, an object of the present invention is to provide a positive electrode for a non-aqueous electrolyte secondary battery, which has a small proportion of the substance that does not contribute to the conduction of lithium ions, and has excellent discharge performance in the low temperature range, as well as a non-aqueous electrolyte secondary battery, a battery module, and a battery system, each using the positive electrode.

**Advantageous Effects of Invention**

The present invention can provide a positive electrode for a non-aqueous electrolyte secondary battery, which can improve the performance of a non-aqueous electrolyte secondary battery in respect of high-rate cycling performance.

Further, the present invention can provide a positive electrode for a positive electrode for a non-aqueous electrolyte secondary battery, which has a small proportion of the substance that does not contribute to the conduction of lithium ions, and has excellent discharge performance in the low temperature range, as well as a non-aqueous electrolyte secondary battery, a battery module, and a battery system, each using the positive electrode.

**Brief Description of Drawings**

[Fig.1]FIG. 1 is a cross-sectional view schematically showing an example of a positive electrode for a non-aqueous electrolyte secondary battery according to the present invention.

[Fig.2]FIG. 2 is a cross-sectional view schematically showing an example of a non-aqueous electrolyte secondary battery according to the present invention.

[Fig.3]FIG. 3 is a graph showing the results of measuring the spectral reflectance of the surface of the positive electrode active material layer in Example B1 and Comparative Example.

**Description of Embodiments**

In the present specification and claims, "to" indicating a numerical range means that the numerical values described before and after "to" are included as the lower limit and the upper limit of the range.

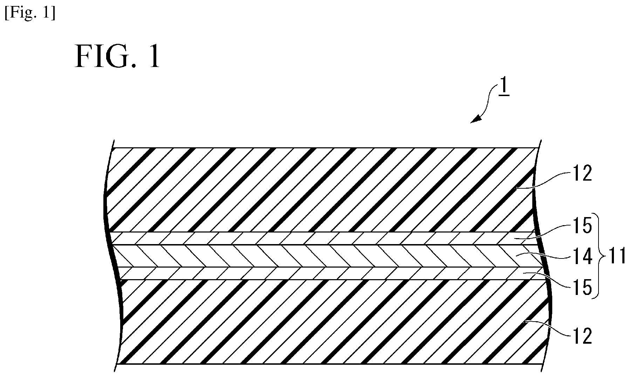

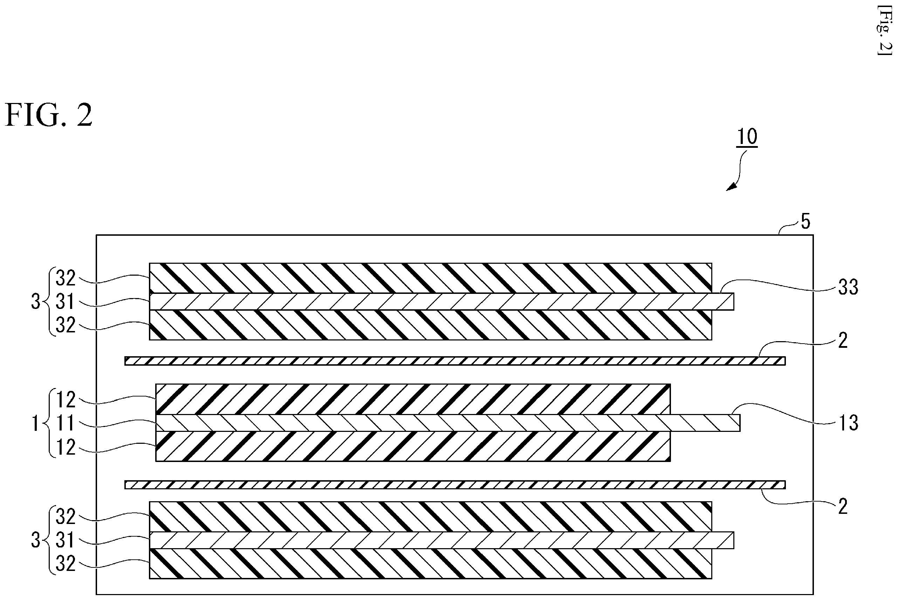

FIG. 1 is a schematic cross-sectional view showing one embodiment of the positive electrode of the present invention for a non-aqueous electrolyte secondary battery, and FIG. 2 is a schematic cross-sectional view showing one embodiment of the non-aqueous electrolyte secondary battery of the present invention.

FIG. 1 and FIG. 2 are schematic diagrams for facilitating the understanding of the configurations, and the dimensional ratios and the like of each component do not necessarily represent the actual ones.

<Positive electrode for non-aqueous electrolyte secondary battery>

In the present embodiment, the positive electrode for a non-aqueous electrolyte secondary battery (also simply referred to as "positive electrode") 1 has a positive electrode current collector 11 and a positive electrode active material layer 12.

The positive electrode active material layer 12 is present on at least one surface of the positive electrode current collector 11. The positive electrode active material layers 12 may be present on both sides of the positive electrode current collector 11.

In the example shown in FIG. 1, the positive electrode current collector 11 has a positive electrode current collector main body 14 and current collector coating layers 15 that cover the positive electrode current collector main body 14 on its surfaces facing the positive electrode active material layers 12. The positive electrode current collector main body 14 alone may be used as the positive electrode current collector 11.

- First Embodiment -

In the first embodiment of the present invention, the positive electrode 1 for a non-aqueous electrolyte secondary battery, includes:
a positive electrode for a non-aqueous electrolyte secondary battery, comprising:a positive electrode current collector comprising a positive electrode current collector main body formed of a metal material; a positive electrode active material layer provided on the positive electrode current collector, wherein the positive electrode active material layer comprises positive electrode active material particles having, on at least a part of their surfaces, a coated section comprising a conductive carbon, the positive electrode active material layer has a conductive carbon content of 0.5 to 3.0 % by mass, based on a total mass of the positive electrode active material layer, the positive electrode active material layer has a pore specific surface area of 5.0 to 10.0 $m^2/g$ and a central pore diameter of 0.06 to 0.15 $\mu$m, wherein the pore specific surface area and the central pore diameter of the positive electrode active material layer are values measured by the mercury intrusion method utilizing the procedures and equipment as described below, and the central pore diameter is calculated as a median diameter (D50, unit: $\mu$m) in the range of the pore diameter of 0.003 to 1.000 $\mu$m in the pore diameter distribution, wherein a volume density of the positive electrode active material layer is 2.05 to 2.80 $g/cm^3$.

The positive electrode having the above configuration can improve the performance of a non-aqueous electrolyte secondary battery in respect of high-rate cycling performance.

More specific explanation is made below.

(Positive electrode active material layer)

The positive electrode active material layer 12 includes a positive electrode active material. The positive electrode active material layer 12 preferably further includes a binder. The positive electrode active material layer 12 may further include a conducting agent. In the context of the present specification, the term "conducting agent" refers to a conductive material of a particulate shape, a fibrous shape, etc., which is mixed with the positive electrode active material for the preparation of the positive electrode active material layer or formed in the positive electrode active material layer, and is caused to be present in the positive electrode active material layer in a form connecting the particles of the positive electrode active material.

The shape of the positive electrode active material (including the mass of the coated section of the active material described later) is preferably particulate.

The amount of the positive electrode active material is preferably 80 to 99.9 % by mass, and more preferably 90 to 99.5% by mass, based on the total mass of the positive electrode active material layer 12.

The positive electrode active material has, on at least a part of its surface, a coated section including a conductive material (hereinbelow, the positive electrode active material particles having such a coated section of the active material are also referred to as "coated particles"). It is more preferable that the entire surfaces of the positive electrode active material particles are coated with a conductive material for achieving more excellent battery capacity and cycling performance.

In this context, the expression "at least a part of its surface" means that the coated section of the active material covers 50 % or more, preferably 70 % or more, more preferably 90 % or more, particularly preferably 100 % of the total area of the entire outer surfaces of the positive electrode active material. This ratio (%) of the coated section (hereinafter, also referred to as "coverage") is an average value for all the positive electrode active material particles present in the positive electrode active material layer. As long as this average value is not less than the above lower limit value, the positive electrode active material layer may contain a small amount of positive electrode active material particles without the coated section. When the positive electrode active material particles without the coated section are present in the positive electrode active material layer, the amount thereof is preferably 30 % by mass or less, more preferably 20 % by mass or less, and particularly preferably 10 % by mass or less, with respect to the total mass of the positive electrode active material particles present in the positive electrode active material layer.

The coverage can be measured by a method as follows. First, the particles in the positive electrode active material layer are analyzed by the energy dispersive X-ray spectroscopy (TEM-EDX) using a transmission electron microscope. Specifically, an elemental analysis is performed by EDX with respect to the outer peripheral portion of the positive electrode active material particles in a TEM image. The elemental analysis is performed on carbon to identify the carbon covering the positive electrode active material particles. A section with a carbon coating having a thickness of 1 nm or more is defined as a coated section, and the ratio of the coated section to the entire circumference of the observed positive electrode active material particle can be determined as the coverage. The measurement can be performed with respect to, for example, 10 positive electrode active material particles, and an average value thereof can be used as a value of the coverage.

Further, the coated section of the active material is a layer directly formed on the surface of particles (core section) composed of only the positive electrode active material, which has a thickness of 1 nm to 100 nm, preferably 5 nm to 50 nm. This thickness can be determined by the above-mentioned TEM-EDX used for the measurement of the coating ratio.

The conductive material of the coated section of the active material preferably contains carbon (conductive carbon). The conductive material may be composed only of carbon, or may be a conductive organic compound containing carbon and elements other than carbon. Examples of the other elements include nitrogen, hydrogen, oxygen and the like. In the conductive organic compound, the amount of the other elements is preferably 10 atomic % or less, and more preferably 5 atomic % or less.

It is more preferable that the conductive material in the coated section of the active material is composed only of carbon.

The amount of the conductive material is 0.1 to 3.0 % by mass, more preferably 0.5 to 1.5 % by mass, and even more preferably 0.7 to 1.3 % by mass, based on the total mass of the positive electrode active material including the coated section.

For example, the coated section of the active material is formed in advance on the surface of the positive electrode active material particles, and is present on the surface of the positive electrode active material particles in the positive electrode active material layer. That is, the coated section of the active material in the present embodiment is not one newly formed in the steps following the preparation step of a positive electrode composition. In addition, the coated section of the active material is not one that comes off in the steps following the preparation step of a positive electrode composition.

For example, the coated section stays on the surface of the positive electrode active material even when the coated particles are mixed with a solvent by a mixer or the like during the preparation of a positive electrode composition. Further, the coated section stays on the surface of the positive electrode active material even when the positive electrode active material layer is detached from the positive electrode and then put into a solvent to dissolve the binder contained in the positive electrode active material layer in the solvent. Furthermore, the coated section stays on the surface of the positive electrode active material even when an operation to disintegrate agglomerated particles is implemented for measuring the particle size distribution of the particles in the positive electrode active material layer by the laser diffraction scattering method.

Examples of the method for producing the coated particles include a sintering method and a vapor deposition method. Examples of the sintering method include a method that sinters an active material composition (for example, a slurry) containing the positive electrode active material particles and an organic substance at 500 to 1000 °C for 1 to 100 hours under atmospheric pressure. Examples of the organic substance added to the active material composition include salicylic acid, catechol, hydroquinone, resorcinol, pyrogallol, fluoroglucinol, hexahydroxybenzene, benzoic acid, phthalic acid, terephthalic acid, phenylalanine, water dispersible phenolic resins, saccharides (e.g., sucrose, glucose and lactose), carboxylic acids (e.g., malic acid and citric acid), unsaturated monohydric alcohols (e.g., allyl alcohol and propargyl alcohol), ascorbic acid, and polyvinyl alcohol. This sintering method sinters an active material composition to allow carbon in the organic material to be fused to the surface of the positive electrode active material to thereby form the coated section of the active material.

Another example of the sintering method is the so-called impact sintering coating method.

The impact sintering coating method is, for example, carried out as follows. In an impact sintering coating device, a burner is ignited using a mixed gas of a hydrocarbon and oxygen as a fuel to burn the mixed gas in a combustion chamber, thereby generating a flame, wherein the amount of oxygen is adjusted so as not to exceed its equivalent amount that allows complete combustion of the fuel, to thereby lower the flame temperature. A powder supply nozzle is installed downstream thereof, from which a solid-liquid-gas three-phase mixture containing a combustion gas as well as a slurry formed by dissolving an organic substance for coating in a solvent is injected toward the flame. The injected fine powder is accelerated at a temperature not higher than the transformation temperature, the sublimation temperature, and the evaporation temperature of the powder material by increasing the amount of combustion gas maintained at room temperature to lower the temperature of the injected fine powder. This allows the particles of the powder to be instantly fused on the active material by impact, thereby forming coated particles of the positive electrode active material.

Examples of the vapor deposition method include a vapor phase deposition method such as a physical vapor deposition method (PVD) and a chemical vapor deposition method (CVD), and a liquid phase deposition method such as plating.

Further, the thickness of the positive electrode active material layer (total thickness of the positive electrode active material layers in the case where the positive electrode active material layers are formed on both sides of the positive electrode current collector) is preferably 30 to 500 $\mu$m, more preferably 40 to 400 $\mu$m, particularly preferably 50 to 300 $\mu$m. When the thickness of the positive electrode active material layer is not less than the lower limit value of the above range, it is possible to provide a positive electrode that can be used for manufacturing a battery having excellent energy density per unit volume. When the thickness is not more than the upper limit value of the above range, the peel strength of the positive electrode active material layer can be improved, thereby preventing delamination of the positive electrode active material layer during charging/discharging.

The positive electrode active material preferably contains a compound having an olivine crystal structure.

The compound having an olivine crystal structure is preferably a compound represented by the following formula: $LiFe_xM_{(1-x)}PO_4$ (hereinafter, also referred to as "formula (I)"). In the formula (I), $0 \leqq x \leqq 1$. M is Co, Ni, Mn, Al, Ti or Zr. A minute amount of Fe and M (Co, Ni, Mn, Al, Ti or Zr) may be replaced with another element so long as the replacement does not affect the physical properties of the compound. The presence of a trace amount of metal impurities in the compound represented by the formula (I) does not impair the effect of the present invention.

The compound represented by the formula (I) is preferably lithium iron phosphate represented by $LiFePO_4$

(hereinafter, also simply referred to as "lithium iron phosphate"). The compound is more preferably lithium iron phosphate particles having, on at least a part of their surfaces, a coated section including a conductive material (hereinafter, also referred to as "coated lithium iron phosphate particles"). It is more preferable that the entire surfaces of lithium iron phosphate particles are coated with a conductive material for achieving more excellent battery capacity and cycling performance.

The coated lithium iron phosphate particles can be produced by a known method.

For example, the coated lithium iron phosphate particles can be obtained by a method in which a lithium iron phosphate powder is prepared by following the procedure described in Japanese Patent No. 5098146, and at least a part of the surface of lithium iron phosphate particles in the powder is coated with carbon by following the procedure described in GS Yuasa Technical Report, June 2008, Vol. 5, No. 1, pp. 27-31 and the like.

Specifically, first, iron oxalate dihydrate, ammonium dihydrogen phosphate, and lithium carbonate are weighed to give a specific molar ratio, and these are pulverized and mixed in an inert atmosphere. Next, the obtained mixture is heat-treated in a nitrogen atmosphere to prepare a lithium iron phosphate powder. Then, the lithium iron phosphate powder is placed in a rotary kiln and heat-treated while supplying methanol vapor with nitrogen as a carrier gas to obtain a powder of lithium iron phosphate particles having at least a part of their surfaces coated with carbon.

For example, the particle size of the lithium iron phosphate powder can be adjusted by optimizing the crushing time in the crushing process. The amount of carbon coating the particles of the lithium iron phosphate powder can be adjusted by optimizing the heating time and temperature in the step of implementing heat treatment while supplying methanol vapor. It is desirable to remove the carbon particles not consumed for coating by subsequent steps such as classification and washing.

The positive electrode active material may contain other positive electrode active materials than the compound having an olivine type crystal structure.

Preferable examples of the other positive electrode active materials include a lithium transition metal composite oxide. Specific examples thereof include lithium cobalt oxide ($LiCoO_2$), lithium nickel oxide ($LiNiO_2$), lithium nickel cobalt aluminum oxide ($LiNi_xCo_yAl_zO_2$ with the proviso that x + y + z = 1), lithium nickel cobalt manganese oxide ($LiNi_xCo_yMn_zO_2$ with the proviso that x + y + z = 1), lithium manganese oxide ($LiMn_2O_4$), lithium manganese cobalt oxide ($LiMnCoO_4$), lithium manganese chromium oxide ($LiMnCrO_4$), lithium vanadium nickel oxide ($LiNiVO_4$), nickel-substituted lithium manganese oxide (e.g., $LiMn_{1.5}Ni_{0.5}O_4$), and lithium vanadium cobalt oxide ($LiCoVO_4$), as well as non stoichiometric compounds formed by partially substituting the compounds listed above with metal elements. Examples of the metal element include one or more selected from the group consisting of Mn, Mg, Ni, Co, Cu, Zn and Ge.

With respect to the other positive electrode active materials, a single type thereof may be used individually or two or more types thereof may be used in combination.

The other positive electrode active material may have, on at least a part of its surface, the coated section described above.

The amount of the compound having an olivine type crystal structure is preferably 50 % by mass or more, preferably 80 % by mass or more, and even more preferably 90 % by mass or more, based on the total mass of the positive electrode active material. This amount may be 100 % by mass.

When the coated lithium iron phosphate particles are used, the amount of the coated lithium iron phosphate particles is preferably 50 % by mass or more, more preferably 80 % by mass or more, and even more preferably 90 % by mass or more, based on the total mass of the positive electrode active material (including the mass of the coated section of the active material). This amount may be 100 % by mass.

The average particle size of the positive electrode active material particles (that is, positive electrode active material powder) (including the thickness of the coated section of the active material) is, for example, preferably 0.1 to 20.0 μm, and more preferably 0.2 to 10.0 μm. When two or more types of positive electrode active materials are used, the average particle size of each of such positive electrode active materials may be within the above range.

The average particle size of the positive electrode active material in the present specification is a volume-based median particle size measured using a laser diffraction/ scattering particle size distribution analyzer.

The binder that can be contained in the positive electrode active material layer 12 is an organic substance, and examples thereof include polyacrylic acid, lithium polyacrylate, polyvinylidene fluoride, polyvinylidene fluoride-hexafluoropropylene copolymers, styrene butadiene rubbers, polyvinyl alcohol, polyvinyl acetal, polyethylene oxide, polyethylene glycol, carboxymethyl cellulose, polyacrylic nitrile, and polyimide. With respect to the binder, a single type thereof may be used alone or two or more types thereof may be used in combination.

When the positive electrode active material layer 12 contains a binder, the amount of the binder in the positive electrode active material layer 12 is, for example, preferably 4.0 % by mass or less, more preferably 2.0 % by mass or less, based on the total mass of the positive electrode active material layer 12. When the amount of the binder is not more than the above upper limit value, the proportion of the substance that does not contribute to the conduction of lithium ions in the positive electrode active material layer 12 is reduced, and the battery performance can be further improved.

When the positive electrode active material layer 12 contains a binder, the lower limit of the amount of the binder is preferably 0.1 % by mass or more, and more preferably 0.5 % by mass or more, based on the total mass of the positive electrode active material layer 12.

That is, when the positive electrode active material layer 12 contains a binder, the amount of the binder is preferably 0.1 % by mass to 4.0 % by mass, and more preferably 0.5 to 2.0 % by mass, based on a total mass of the positive electrode active material layer 12.

Examples of the conducting agent contained in the positive electrode active material layer 12 include carbon materials such as carbon black (e.g., Ketjen black, and acetylene black), graphite, graphene, hard carbon, and carbon nanotube (CNT). With respect to the conducting agent, a single type thereof may be used alone or two or more types thereof may be used in combination. When carbon black is contained as the conducting agent, the amount of carbon black is preferably 0.2 parts by mass or more and less than 5.0 parts by mass, and more preferably 0.4 to 2.0 parts by mass, relative to 100 parts by mass of the total mass of the positive electrode active material (including the mass of the coated section of the active material).

The amount of the conducting agent in the positive electrode active material layer 12 is, for example, preferably 4 parts by mass or less, more preferably 3 parts by mass or less, and even more preferably 1 part by mass or less, relative to 100 parts by mass of the total mass of positive electrode active material. It is particularly preferable that the positive electrode active material layer 12 does not contain a conducting agent, and it is desirable that there are no independent conducting agent particles (for example, independent carbon particles).

The "conducting agent" is a conductive material independent of the positive electrode active material, and may include a conductive material having a fibrous form (for example, carbon nanotube) as well as isolated conducting agent particles.

The conducting agent in contact with the positive electrode active material particles in the positive electrode active material layer is not regarded as the conductive material constituting the coated section of the positive electrode active material.

When the conducting agent is incorporated into the positive electrode active material layer 12, the lower limit value of the amount of the conducting agent is appropriately determined according to the type of the conducting agent, and is, for example, more than 0.1 % by mass, based on the total mass of the positive electrode active material layer 12.

That is, when the positive electrode active material layer 12 contains the conducing agent, the amount of the conducing agent is preferably 0.2 to 4 parts by mass, more preferably 0.3 to 3 parts by mass, and even more preferably 0.5 to 1 parts by mass, relative to 100 parts by mass of the total mass of positive electrode active material.

In the context of the present specification, the expression "the positive electrode active material layer 12 does not contain a conducting agent" or similar expression means that the positive electrode active material layer 12 does not substantially contain a conducting agent, and should not be construed as excluding a case where a conducting agent is contained in such an amount that the effects of the present invention are not affected. For example, if the amount of the conducting agent is 0.1 % by mass or less, based on the total mass of the positive electrode active material layer 12, then, it is judged that substantially no conducting agent is contained.

The average particle size of the conducting agent particles (that is, conducting agent powder) is preferably, for example, 0.001 to 1.0 $\mu$m, more preferably 0.01 to 0.10 $\mu$m. When two or more types of the conducting agents are used, the average particle size of each of such conducting agents may be within the above range.

The average particle size of the conducting agent in the present specification is a volume-based median particle size measured using a laser diffraction/scattering particle size distribution analyzer.

(Positive electrode current collector)

The positive electrode current collector body 14 is formed of a metal material. Examples of the metal material include conductive metals such as copper, aluminum, titanium, nickel, and stainless steel.

The thickness of the positive electrode current collector main body 14 is preferably, for example, 8 to 40 $\mu$m, and more preferably 10 to 25 $\mu$m.

The thickness of the positive electrode current collector main body 14 and the thickness of the positive electrode current collector 11 can be measured using a micrometer. One example of the measuring instrument usable for this purpose is an instrument with the product name "MDH-25M", manufactured by Mitutoyo Co., Ltd.

(Current collector coating layer)

The current collector coating layer 15 contains a conductive material.

The conductive material in the current collector coating layer 15 preferably contains carbon (conductive carbon), and more preferably consists exclusively of carbon.

The current collector coating layer 15 is preferred to be, for example, a coating layer containing carbon particles such as carbon black and a binder. Examples of the binder for the current collector coating layer 15 include those listed above as examples of the binder for the positive electrode active material layer 12.

With regard to the production of the positive electrode current collector 11 in which the surface of the positive electrode current collector main body 14 is coated with the current collector coating layer 15, for example, the production can be implemented by a method in which a slurry containing the conductive material, the binder, and a solvent is applied to the surface of the positive electrode current collector main body 14 with a known coating method such as a gravure method, followed by drying to remove the solvent.

The thickness of the current collector coating layer 15 is preferably 0.1 to 4.0 $\mu$m.

The thickness of the current collector coating layer can be measured by a method of measuring the thickness of the coating layer in a transmission electron microscope (TEM) image or a scanning electron microscope (SEM) image of a cross section of the current collector coating layer. The thickness of the current collector coating layer need not be uniform. It is preferable that the current collector coating layer having a thickness of 0.1 $\mu$m or more is present on at least a part of the surface of the positive electrode current collector main body 14, and the maximum thickness of the current collector coating layer is 4.0 $\mu$m or less.

(Method for producing positive electrode)

For example, the positive electrode 1 of the present embodiment can be produced by a method in which a positive electrode composition containing a positive electrode active material, a binder and a solvent is coated on the positive electrode current collector 11, followed by drying to remove the solvent to thereby form a positive electrode active material layer 12. The positive electrode composition may contain a conducting agent. When producing the positive electrode composition, it is preferable not to perform the high pressure dispersion treatment.

The thickness of the positive electrode active material layer 12 can be adjusted by a method in which a layered body composed of the positive electrode current collector 11 and the positive electrode active material layer 12 formed thereon is placed between two flat plate jigs and, then, uniformly pressurized in the thickness direction of this layered body. For this purpose, for example, a method of pressurizing using a roll press can be used.

The solvent for the positive electrode composition is preferably a non-aqueous solvent. Examples of the solvent include alcohols such as methanol, ethanol, 1-propanol and 2-propanol; chain or cyclic amides such as N-methylpyrrolidone and N,N-dimethylformamide; and ketones such as acetone. With respect to these solvents, a single type thereof may be used individually or two or more types thereof may be used in combination.

In the present embodiment, one or both of the positive electrode current collector 11 and the positive electrode active material layer 12 preferably include conductive carbon.

When the positive electrode active material layer 12 contains conductive carbon, it is preferable that at least one of the conductive material coating the positive electrode active material and the conducting agent contains the carbon.

When the positive electrode current collector 11 contains conductive carbon, it is preferable that the conductive material in the current collector coating layer 15 contains the carbon.

The positive electrode 1 preferably has a conductive carbon content of 0.5 to 5.0 % by mass, more preferably 1.0 to 3.5 % by mass, even more preferably 1.5 to 3.0% by mass with respect to the mass of the positive electrode 1 excluding the positive electrode current collector main body 14.

When the positive electrode 1 is composed of the positive electrode current collector main body 14 and the positive electrode active material layer 12, the mass of the positive electrode 1 excluding the positive electrode current collector main body 14 is the mass of the positive electrode active material layer 12.

When the positive electrode 1 is composed of the positive electrode current collector main body 14, the current collector coating layer 15, and the positive electrode active material layer 12, the mass of the positive electrode 1 excluding the positive electrode current collector main body 14 is the sum of the mass of the current collector coating layer 15 and the mass of the positive electrode active material layer 12.

When the conductive carbon content based the mass of the positive electrode 1 excluding the positive electrode current collector main body 14 is within the above range, the battery capacity can be further improved, and a non-aqueous electrolyte secondary battery with a further improved cycling performance can be realized.

The amount of the conductive carbon with respect to the mass of the positive electrode 1 excluding the positive electrode current collector main body 14 can be measured by <<Method for measuring conductive carbon content>> described below with respect to a dried product (powder), as a measurement target, obtained by detaching the whole of a layer present on the positive electrode current collector main body 14, collecting the whole of substance resulting from the detached layer, and vacuum-drying the collected substance at 120 °C.

The conductive carbon to be measured by the <<Method for measuring conductive carbon content>> described below includes carbon in the coated section of the active material, carbon in the conducting agent, and carbon in the current collector coating layer 15. Carbon in the binder is not included in the conductive carbon to be measured.

As a method for obtaining the measurement target, for example, the following method can be adopted.

First, the layer (powder) present on the positive electrode current collector main body 14 is completely detached by a method in which the positive electrode 1 is punched to obtain a piece having a predetermined size, and the piece of the positive electrode current collector main body 14 is immersed in a solvent (for example, N-methylpyrrolidone) and stirred. Next, after confirming that no powder remains attached to the positive electrode current collector main body 14, the positive electrode current collector main body 14 is taken out from the solvent to obtain a suspension (slurry) containing the detached powder and the solvent. The obtained suspension is dried at 120 °C to completely volatilize the solvent to obtain the desired measurement target (powder).

When at least one of the conductive material covering the positive electrode active material and the conducting agent contains carbon (conductive carbon), the conductive carbon content is preferably 0.5 to 5.0 % by mass, and preferably 1.0 to 3.5 % by mass, even more preferably 1.5 to 3.0 % by mass, based on the total mass of the positive electrode active material layer 12.

The conductive carbon content based the total mass of the positive electrode active material layer 12 can be measured by <<Method for measuring conductive carbon content >> described below with respect to a dried product (powder), as a measurement target, obtained by vacuum-drying, at 120 °C, the positive electrode active material layer 12 detached from the current collector.

The conductive carbon to be measured by the <<Method for measuring conductive carbon content>> described below includes carbon in the conductive material covering the positive electrode active material, and carbon in the conducting agent. Carbon in the binder is not included in the conductive carbon to be measured.

When the conductive carbon content based the total mass of the positive electrode active material layer 12 is within the above range, the battery capacity can be further improved, and a non-aqueous electrolyte secondary battery with a further improved cycling performance can be realized.

When the current collector coating layer 15 and the positive electrode active material layer 12 are present on the positive electrode current collector main body 14, the measurement target to be used for measuring the amount of the conductive carbon with respect to the total mass of the positive electrode active material layer 12 is a dried product (powder) obtained by detaching only the powder constituting the positive electrode active material layer 12 and vacuum drying the powder in an environment of 120 °C. For example, the measurement target may be one obtained by detaching the outermost surface of the positive electrode active material layer with a depth of several $\mu$m using a spatula or the like, and vacuum drying the resulting powder in an environment of 120 °C.

<<Method for measuring conductive carbon content>>

(Measurement method A)

A sample having a weight w1 is taken from a homogeneously mixed product of the measurement target, and the sample is subjected to thermogravimetry differential thermal analysis (TG-DTA) implemented by following step A1 and step A2 defined below, to obtain a TG curve. From the obtained TG curve, the following first weight loss amount M1 (unit: % by mass) and second weight loss amount M2 (unit: % by mass) are obtained. By subtracting M1 from M2, the conductive carbon content (unit: % by mass) is obtained.

Step A1: A temperature of the sample is raised from 30 °C to 600 °C at a heating rate of 10 °C/min and holding the temperature at 600 °C for 10 minutes in an argon gas stream of 300 mL/min to measure a resulting mass w2 of the sample, from which a first weight loss amount M1 is determined by formula (a1):

$$M1 = (w1 - w2)/w1 \times 100 \qquad (a1)$$

Step A2: Immediately after the step A1, the temperature is lowered from 600 °C to 200 °C at a cooling rate of 10 °C/min and held at 200 °C for 10 minutes, followed by completely substituting the argon gas stream with an oxygen gas stream. The temperature is raised from 200 °C to 1000 °C at a heating rate of 10 °C/min and held at 1000 °C for 10 minutes in an oxygen gas stream of 100 mL/min to measure a resulting mass w3 of the sample, from which a second weight loss amount M2 (unit: % by mass) is calculated by formula (a2):

$$M2 = (w1 - w3)/w1 \times 100 \qquad (a2).$$

(Measurement method B)

0.0001 mg of a precisely weighed sample is taken from a homogeneously mixed product of the measurement target, and the sample is burnt under burning conditions defined below to measure an amount of generated carbon dioxide by a CHN elemental analyzer, from which a total carbon content M3 (unit: % by mass) of the sample is determined. Also, a first weight loss amount M1 is determined following the procedure of the step A1 of the measurement method A. By subtracting M1 from M3, the conductive carbon content (unit: % by mass) is obtained.

(Burning conditions)

Temperature of combustion furnace: 1150 °C.
Temperature of reduction furnace: 850 °C.
Helium flow rate: 200 mL / min.
Oxygen flow rate: 25 to 30 mL/min.

(Measurement method C)

The total carbon content M3 (unit: % by mass) of the sample is measured in the same manner as in the above measurement method B. Further, the carbon amount M4 (unit: % by mass) of carbon derived from the binder is determined by the following method. M4 is subtracted from M3 to determine a conductive carbon content (unit: % by mass).

When the binder is polyvinylidene fluoride (PVDF: monomer ($CH_2CF_2$), molecular weight 64), the conductive carbon content can be calculated by the following formula from the fluoride ion (F) content (unit: % by mass) measured by combustion ion chromatography based on the tube combustion method, the atomic weight (19) of fluorine in the monomers constituting PVDF, and the atomic weight (12) of carbon in the PVDF.

$$\text{PVDF content (unit: \% by mass)} = \text{fluoride ion content (unit: \% by mass)} \times 64/38$$

PVDF-derived carbon amount M4 (unit: % by mass) = fluoride ion content (unit: % by mass) $\times$ 12/19

The presence of polyvinylidene fluoride as a binder can be verified by a method in which a sample or a liquid obtained by extracting a sample with an N,N-dimethylformamide (DMF) solvent is subjected to Fourier transform infrared spectroscopy (FT-IR) to confirm the absorption attributable to the C-F bond. Such verification can be also implemented by $^{19}$F-NMR measurement.

When the binder is identified as being other than PVDF, the carbon amount M4 attributable to the binder can be calculated by determining the amount (unit: % by mass) of the binder from the measured molecular weight, and the carbon content (unit: % by mass).

Depending on the composition of the positive electrode active material and the like, an appropriate method can be selected from [Measurement method A] to [Measurement method C] to determine the conductive carbon content, but it is preferable to determine the conductive carbon content by the [Measurement method B] in terms of versatility, etc.

These methods are described in the following publications:

Toray Research Center, The TRC News No. 117 (Sep. 2013), pp. 34-37, [Searched on February 10, 2021], Internet <https://www.toray-research.co.jp/technical-info/trcnews/pdf/TRC117(34-37).pdf >
TOSOH Analysis and Research Center Co., Ltd., Technical Report No. T1019 2017.09.20, [Searched on February 10, 2021], Internet <http://www.tosoh-arc.co.jp/techrepo/files/tarc00522/T1719N.pdf>

<<Analytical method for conductive carbon>>

The conductive carbon in the coated section of the active material and the conductive carbon as the conducting agent can be distinguished by the following analytical method.

For example, particles in the positive electrode active material layer are analyzed by a combination of transmission electron microscopy-electron energy loss spectroscopy (TEM-EELS), and particles having a carbon-derived peak around 290 eV only near the particle surface can be judged to be the positive electrode active material. On the other hand, particles having a carbon-derived peak inside the particles can be judged to be the conducting agent. In this context, "near the particle surface" means a region to the depth of 100 nm from the particle surface, while "inside" means an inner region positioned deeper than the "near the particle surface".

As another method, the particles in the positive electrode active material layer are analyzed by Raman spectroscopy mapping, and particles showing carbon-derived G-band and D-band as well as a peak of the positive electrode active material-derived oxide crystals can be judged to be the positive electrode active material. On the other hand, particles showing only G-band and D-band can be judged to be the conducting agent.

As still another method, a cross section of the positive electrode active material layer is observed with scanning spread resistance microscope (SSRM). When the particle surface has a region with lower resistance than the inside of the particle, the region with lower resistance can be judged to be the conductive carbon present in the coated section of the active material. Other particles that are present independently and have low resistance can be judged to be the conducting agent.

In this context, a trace amount of carbon considered to be an impurity and a trace amount of carbon unintentionally removed from the surface of the positive electrode active material during production are not judged to be the conducting agent.

Using any of these methods, it is possible to verify whether or not the conducting agent formed of carbon material is contained in the positive electrode active material layer.

(Pore specific surface area and central pore diameter of positive electrode active material layer)

The positive electrode active material layer 12 in the positive electrode of the present embodiment has a pore specific surface area of 5.0 to 10.0 m$^2$/g, and a central pore diameter of 0.06 to 0.15 $\mu$m.

In the present specification, the pore specific surface area and the central pore diameter of the positive electrode active material layer 12 are values measured by the mercury intrusion method. The central pore diameter is calculated as a median diameter (D50, unit: $\mu$m) in the range of the pore diameter of 0.003 to 1.000 $\mu$m in the pore diameter distribution.

The pore specific surface area is preferably 6.0 to 9.5 m$^2$/g, and more preferably 7.0 to 9.0 m$^2$/g.

The central pore diameter is preferably 0.06 to 0.130 $\mu$m, and more preferably 0.08 to 0.120 $\mu$m.

When the pore specific surface area and the central pore diameter of the positive electrode active material layer 12 are within the above ranges, the effect of improving the high-rate cycling performance of a non-aqueous electrolyte secondary battery is excellent.

When the pore specific surface area is not more than the upper limit of the above range, the reaction surface area is small, so that the current is locally concentrated on the fine powder of the positive electrode active material, the conducting agent, or the like during the high-rate charge/discharge cycling. As a result, there are fewer sites where side reactions between the positive electrode 1 and the electrolytic solution are likely to occur, and deterioration is likely to be suppressed.

When the central pore diameter is not less than the lower limit of the above range, there are few sites where fine powder of the positive electrode active material and conducting agent are aggregated, so that reaction unevenness is unlikely to occur during the high-rate charge/discharge cycling. As a result, there are fewer sites where side reactions between the positive electrode 1 and the electrolytic solution are likely to occur, and deterioration is likely to be suppressed.

The pore specific surface area and the central pore diameter of the positive electrode active material layer 12 can be controlled by, for example, adjusting the amount of the positive electrode active material, the particle size of the positive electrode active material, the thickness of the positive electrode active material layer 12, and the like. When the positive electrode active material layer 12 contains the conducting agent, the pore specific surface area and the central pore diameter of the positive electrode active material layer 12 can also be controlled by adjusting the amount of the conducting agent and the particle size of the conducting agent. Further, the pore specific surface area and the central pore diameter of the positive electrode active material layer 12 is also affected by the amount of fine powder contained in the positive electrode active material and the dispersed state when preparing the positive electrode composition.

For example, when the particle size of the conducting agent is smaller than the particle size of the positive electrode material, the pore specific surface area can be reduced and the central pore diameter can be increased by reducing the amount of the conducting agent.

The ratio of the average particle size of the positive electrode active material with respect to the average particle size of the conducting agent is preferably 10 to 10000, more preferably 50 to 5000, and even more preferably 100 to 1000.

(Volume density of positive electrode active material layer)

In the present embodiment, the volume density of the positive electrode active material layer 12 is 2.05 to 2.80 g/cm$^3$, preferably 2.15 to 2.50 g/cm$^3$.

The volume density of the positive electrode active material layer 12 can be measured by, for example, the following measuring method.

The thicknesses of the positive electrode 1 and the positive electrode current collector 11 are each measured with a micrometer, and the difference between these two thickness values is calculated as the thickness of the positive electrode active material layer 12. With respect to the thickness of the positive electrode 1 and the thickness of the positive electrode current collector 11, each of these thickness values is an average value of the thickness values measured at five or more randomly chosen points (sufficiently separated from each other). The thickness of the positive electrode current collector 11 may be measured at the exposed section 13 of the positive electrode current collector, which is described below.

The mass of the measurement sample punched out from the positive electrode so as to have a predetermined area is measured, from which the mass of the positive electrode current collector 11 measured in advance is subtracted to calculate the mass of the positive electrode active material layer 12.

The volume density of the positive electrode active material layer 12 is calculated by the following formula (1).

$$\text{Volume density (unit: g/cm}^3\text{)} = \text{mass of positive electrode active material layer (unit: g)/[(thickness of positive electrode active material layer (unit: cm))} \times \text{area of measurement sample (Unit: cm}^2\text{)]} \tag{1}$$

When the volume density of the positive electrode active material layer 12 is within the above range, the volumetric energy density of the battery can be further improved, and a non-aqueous electrolyte secondary battery with a further improved cycling performance can be realized.

The volume density of the positive electrode active material layer 12 can be controlled by, for example, adjusting the amount of the positive electrode active material, the particle size of the positive electrode active material, the thickness of the positive electrode active material layer 12, and the like. When the positive electrode active material layer 12 contains a conducting agent, the volume density can also be controlled by selecting the type of the conducting agent (specific surface area, specific gravity), or adjusting the amount of the conducting agent, and the particle size of the conducting agent.

<Non-aqueous electrolyte secondary battery>

The non-aqueous electrolyte secondary battery 10 of the present embodiment shown in FIG. 2 includes a positive electrode 1 of the present embodiment, a negative electrode 3, and a non-aqueous electrolyte. Further, a separator 2 may be provided. Reference numeral 5 in FIG. 1 denotes an outer casing.

In the present embodiment, the positive electrode 1 has a plate-shaped positive electrode current collector 11 and positive electrode active material layers 12 provided on both surfaces thereof. The positive electrode active material layer 12 is present on a part of each surface of the positive electrode current collector 11. The edge of the surface of the positive electrode current collector 11 is an exposed section 13 of the positive electrode current collector, which is free of the positive electrode active material layer 12. A terminal tab (not shown) is electrically connected to an arbitrary portion of the exposed section 13 of the positive electrode current collector.

The negative electrode 3 has a plate-shaped negative electrode current collector 31 and negative electrode active material layers 32 provided on both surfaces thereof. The negative electrode active material layer 32 is present on a part of each surface of the negative electrode current collector 31. The edge of the surface of the negative electrode current collector 31 is an exposed section 33 of the negative electrode current collector, which is free of the negative electrode active material layer 32. A terminal tab (not shown) is electrically connected to an arbitrary portion of the exposed section 33 of the negative electrode current collector.

The shapes of the positive electrode 1, the negative electrode 3 and the separator 2 are not particularly limited. For example, each of these may have a rectangular shape in a plan view.

With regard to the production of the non-aqueous electrolyte secondary battery 10 of the present embodiment, for example, the production can be implemented by a method in which the positive electrode 1 and the negative electrode 3 are alternately interleaved through the separator 2 to produce an electrode layered body, which is then packed into an outer casing such as an aluminum laminate bag, and a non-aqueous electrolyte (not shown) is injected into the outer casing, followed by sealing the outer casing.

FIG. 2 shows a representative example of a structure of the battery in which the negative electrode, the separator, the positive electrode, the separator, and the negative electrode are stacked in this order, but the number of electrodes can be altered as appropriate. The number of the positive electrode 1 may be one or more, and any number of positive electrodes 1 can be used depending on a desired battery capacity. The number of each of the negative electrode 3 and the separator 2 is larger by one sheet than the number of the positive electrode 1, and these are stacked so that the negative electrode 3 is located at the outermost layer.

(Negative electrode)

The negative electrode active material layer 32 includes a negative electrode active material. Further, the negative electrode active material layer 32 may further include a binder. Furthermore, the negative electrode active material layer 32 may include a conducting agent as well. The shape of the negative electrode active material is preferably particulate.

For example, the negative electrode 3 can be produced by a method in which a negative electrode composition containing a negative electrode active material, a binder and a solvent is prepared, and coated on the negative electrode current collector 31, followed by drying to remove the solvent to thereby form a negative electrode active material layer 32. The negative electrode composition may contain a conducting agent.

Examples of the negative electrode active material and the conducting agent include carbon materials such as graphite, graphene, hard carbon, Ketjen black, acetylene black, and carbon nanotube (CNT). With respect to each of the negative electrode active material and the conducting agent, a single type thereof may be used alone or two or more types thereof may be used in combination.

Examples of the material of the negative electrode current collector 31, the binder and the solvent in the negative electrode composition include those listed above as examples of the material of the positive electrode current collector 11, the binder and the solvent in the positive electrode composition. With respect to each of the binder and the solvent in the negative electrode composition, a single type thereof may be used alone or two or more types thereof may be used in combination.

The sum of the amount of the negative electrode active material and the amount of the conducting agent is preferably 80.0 to 99.9 % by mass, and more preferably 85.0 to 98.0 % by mass, based on the total mass of the negative electrode active material layer 32.

(Separator)

The separator 2 is disposed between the negative electrode 3 and the positive electrode 1 to prevent a short circuit or the like. The separator 2 may retain a non-aqueous electrolyte described below.

The separator 2 is not particularly limited, and examples thereof include a porous polymer film, a non-woven fabric, and glass fiber.

An insulating layer may be provided on one or both surfaces of the separator 2. The insulating layer is preferably a layer having a porous structure in which insulating fine particles are bonded with a binder for an insulating layer.

The separator 2 may contain various plasticizers, antioxidants, and flame retardants.

Examples of the antioxidant include phenolic antioxidants such as hindered-phenolic antioxidants, monophenolic antioxidants, bisphenolic antioxidants, and polyphenolic antioxidants; hinderedamine antioxidants; phosphorus antioxidants; sulfur antioxidants; benzotriazole antioxidants; benzophenone antioxidants; triazine antioxidants; and salicylate antioxidants. Among these, phenolic antioxidants and phosphorus antioxidants are preferable.

(Non-aqueous electrolyte)

The non-aqueous electrolyte fills the space between the positive electrode 1 and the negative electrode 3. For example, any of known non-aqueous electrolytes used in lithium ion secondary batteries, electric double layer capacitors and the like can be used. As the non-aqueous electrolyte, a non-aqueous electrolyte solution in which an electrolyte salt is dissolved in an organic solvent is preferable.

The organic solvent is preferably one having tolerance to high voltage. Examples of the organic solvent include polar solvents such as ethylene carbonate, propylene carbonate, dimethyl carbonate, diethyl carbonate, ethyl methyl carbonate, $\gamma$-butyrolactone, sulfolane, dimethyl sulfoxide, acetonitrile, dimethylformamide, dimethylacetamide, 1,2-dimethoxyethane, 1,2-diethoxyethane, tetrohydrafuran, 2-methyltetrahydrofuran, dioxolane, and methyl acetate, as well as mixtures of two or more of these polar solvents.

The electrolyte salt is not particularly limited, and examples thereof include lithium-containing salts such as $LiClO_4$, $LiPF_6$, $LiBF_4$, $LiAsF_6$, $LiCF_6$, $LiCF_3CO_2$, $LiPF_6SO_3$, $LiN(SO_2F)_2$, $LiN(SO_2CF_3)_2$, $Li(SO_2CF_2CF_3)_2$, $LiN(COCF_3)_2$, and $LiN(COCF_2CF_3)_2$, as well as mixture of two or more of these salts.

The non-aqueous electrolyte secondary battery of this embodiment can be used as a lithium ion secondary battery for various purposes such as industrial use, consumer use, automobile use, and residential use.

The application of the non-aqueous electrolyte secondary battery of this embodiment is not particularly limited. For example, the battery can be used in a battery module configured by connecting a plurality of non-aqueous electrolyte secondary batteries in series or in parallel, a battery system including a plurality of electrically connected battery modules and a battery control system, and the like.

Examples of the battery system include battery packs, stationary storage battery systems, automobile power storage battery systems, automobile auxiliary storage battery systems, emergency power storage battery systems, and the like.

- Second Embodiment -

In the second embodiment, which is not part of the present invention, a positive electrode 1 for a non-aqueous electrolyte secondary battery, includes a positive electrode current collector 11 and a positive electrode active material layer 12 provided on the positive electrode current collector 11, wherein a thickness of the positive electrode active material layer 12 is 10 µm or more, the positive electrode active material layer 12 includes a positive electrode active material, and a reflectance of a surface of the positive electrode active material layer 12 is 5.5 % or higher in a wavelength range of 200 nm to 850 nm, and is not higher than a reflectance in the wavelength range of 200 nm to 850 nm peculiar to the positive electrode active material contained in the positive electrode active material layer 12.

The positive electrode having the above configuration has a small proportion of the substance that does not contribute to the conduction of lithium ions, and can improve the discharge performance of the non-aqueous electrolyte secondary battery in a low temperature range.

More specific explanation is made below.

(Positive electrode active material layer)

The positive electrode active material layer 12 includes a positive electrode active material. The positive electrode active material layer 12 preferably further includes a binder. The positive electrode active material layer 12 may further include a conducting agent. In the context of the present specification, the term "conducting agent" refers to a conductive material of a particulate shape, a fibrous shape, etc., which is mixed with the positive electrode active material for the preparation of the positive electrode active material layer or formed in the positive electrode active material layer, and is caused to be present in the positive electrode active material layer in a form connecting the positive electrode active material particles.

The positive electrode active material particles include a positive electrode active material. The positive electrode active material particles may be particles composed of only the positive electrode active material, or may have a core section composed of only the positive electrode active material, and a coating section covering the core section (particles having such a coated section of the an material are hereinafter also referred to as "coated particles"). It is preferable that at least a part of the positive electrode active material particles contained in the positive electrode active material layer 12 are coated particles.

The amount of the positive electrode active material particles is preferably 80.0 to 99.9 % by mass, and more preferably 90.0 to 99.5% by mass, based on the total mass of the positive electrode active material layer 12.

In the coated particles, the positive electrode active material has, on at least a part of its surface, a coated section of the active material including a conductive material (hereinbelow, the positive electrode active material particles having such a coated section of the active material are also referred to as "coated particles").

It is more preferable that the entire surfaces of the positive electrode active material particles are coated with a conductive material for achieving more excellent battery capacity and cycling performance.

In this context, the expression "at least a part of its surface" means that the coated section of the active material covers 50 % or more, preferably 70 % or more, more preferably 90 % or more, particularly preferably 100 % of the total area of the entire outer surfaces of the positive electrode active material. This ratio (%) of the coated section (hereinafter, also referred to as "coverage") is an average value for all the positive electrode active material particles present in the positive electrode active material layer. As long as this average value is not less than the above lower limit value, the positive electrode active material layer may contain a small amount of positive electrode active material particles without the coated section. When the positive electrode active material particles without the coated section are present in the positive electrode active material layer, the amount thereof is preferably 30 % by mass or less, more preferably 20 % by mass or less, and particularly preferably 10 % by mass or less, with respect to the total mass of the positive electrode active material particles present in the positive electrode active material layer.

The coverage can be measured by a method as follows. First, the particles in the positive electrode active material layer are analyzed by the energy dispersive X-ray spectroscopy (TEM-EDX) using a transmission electron microscope. Specifically, an elemental analysis is performed by EDX with respect to the outer peripheral portion of the positive electrode active material particles in a TEM image. The elemental analysis is performed on carbon to identify the carbon covering the positive electrode active material particles. A section with a carbon coating having a thickness of 1 nm or more is defined as a coated section, and the ratio of the coated section to the entire circumference of the observed positive electrode active material particle can be determined as the coverage. The measurement can be performed with respect to, for example, 10 positive electrode active material particles, and an average value thereof can be used as a value of the coverage.

Further, the coated section of the active material is a layer directly formed on the surface of particles (core section) composed of only the positive electrode active material, which has a thickness of 1 nm to 100 nm, preferably 5 nm to 50 nm. This thickness can be determined by the above-mentioned TEM-EDX used for the measurement of the coating ratio.

The conductive material of the coated section of the active material preferably contains carbon (conductive carbon). The conductive material may be composed only of carbon, or may be a conductive organic compound containing carbon and elements other than carbon. Examples of the other elements include nitrogen, hydrogen, oxygen and the like. In the conductive organic compound, the amount of the other elements is preferably 10 atomic % or less, and more preferably 5 atomic % or less.

It is more preferable that the conductive material in the coated section of the active material is composed only of carbon.

For example, the coated section of the active material is formed in advance on the surface of the positive electrode active material particles, and is present on the surface of the positive electrode active material particles in the positive electrode active material layer. That is, the coated section of the active material in the present embodiment is not one newly formed in the steps following the preparation step of a positive electrode composition. In addition, the coated section of the active material is not one that comes off in the steps following the preparation step of a positive electrode composition.

For example, the coated section stays on the surface of the positive electrode active material even when the coated particles are mixed with a solvent by a mixer or the like during the preparation of a positive electrode composition. Further, the coated section stays on the surface of the positive electrode active material even when the positive electrode active material layer is detached from the positive electrode and then put into a solvent to dissolve the binder contained in the positive electrode active material layer in the solvent. Furthermore, the coated section stays on the surface of the positive electrode active material even when an operation to disintegrate agglomerated particles is implemented for measuring the particle size distribution of the particles in the positive electrode active material layer by the laser diffraction scattering method.

Examples of the method for producing the coated particles include a sintering method and a vapor deposition method. Examples of the sintering method include a method that sinters an active material composition (for example, a slurry) containing the positive electrode active material particles and an organic substance at 500 to 1000 °C for 1 to 100 hours under atmospheric pressure. Examples of the organic substance added to the active material composition include salicylic acid, catechol, hydroquinone, resorcinol, pyrogallol, fluoroglucinol, hexahydroxybenzene, benzoic acid, phthalic acid, terephthalic acid, phenylalanine, water dispersible phenolic resins, saccharides (e.g., sucrose, glucose and lactose), carboxylic acids (e.g., malic acid and citric acid), unsaturated monohydric alcohols (e.g., allyl alcohol and propargyl alcohol), ascorbic acid, and polyvinyl alcohol. This sintering method sinters an active material composition to allow carbon in the organic material to be fused to the surface of the positive electrode active material to thereby form the coated section of the active material.

Another example of the sintering method is the so-called impact sintering coating method.

The impact sintering coating method is, for example, carried out as follows. In an impact sintering coating device, a burner is ignited using a mixed gas of a hydrocarbon and oxygen as a fuel to burn the mixed gas in a combustion chamber, thereby generating a flame, wherein the amount of oxygen is adjusted so as not to exceed its equivalent amount that allows complete combustion of the fuel, to thereby lower the flame temperature. A powder supply nozzle is installed downstream thereof, from which a solid-liquid-gas three-phase mixture containing a combustion gas as well as a slurry formed by dissolving an organic substance for coating in a solvent is injected toward the flame. The injected fine powder is accelerated at a temperature not higher than the transformation temperature, the sublimation temperature, and the evaporation temperature of the powder material by increasing the amount of combustion gas maintained at room temperature to lower the temperature of the injected fine powder. This allows the particles of the powder to be instantly fused on the active material by impact, thereby forming coated particles of the positive electrode active material.

Examples of the vapor deposition method include a vapor phase deposition method such as a physical vapor deposition method (PVD) and a chemical vapor deposition method (CVD), and a liquid phase deposition method such as plating.

The amount of the conductive material is 0.1 to 3.0 % by mass, more preferably 0.5 to 1.5 % by mass, and even more preferably 0.7 to 1.3 % by mass, based on the total mass of the positive electrode active material including the coated section of the active material.

The positive electrode active material preferably contains a compound having an olivine crystal structure.

The compound having an olivine crystal structure is preferably a compound represented by the following formula: $LiFe_xM_{(1-x)}PO_4$(hereinafter, also referred to as "formula (1)"). In the formula (1), $0 \leq x \leq 1$. M is Co, Ni, Mn, Al, Ti or Zr. A minute amount of Fe and M (Co, Ni, Mn, Al, Ti or Zr) may be replaced with another element so long as the replacement does not affect the physical properties of the compound. The presence of a trace amount of metal impurities in the compound represented by the formula (1) does not impair the effect of the present invention.

The compound represented by the formula (1) is preferably lithium iron phosphate represented by $LiFePO_4$ (hereinafter, also simply referred to as "lithium iron phosphate").

The positive electrode active material may contain other positive electrode active materials than the compound having an olivine type crystal structure.

Preferable examples of the other positive electrode active materials include a lithium transition metal composite oxide. Specific examples thereof include lithium cobalt oxide ($LiCoO_2$), lithium nickel oxide ($LiNiO_2$), lithium nickel cobalt aluminum oxide ($LiNi_xCo_yAl_zO_2$ with the proviso that x + y + z = 1), lithium nickel cobalt manganese oxide ($LiNi_xCo_yMn_zO_2$ with the proviso that x + y + z = 1), lithium manganese oxide ($LiMn_2O_4$), lithium manganese cobalt oxide ($LiMnCoO_4$), lithium manganese chromium oxide ($LiMnCrO_4$), lithium vanadium nickel oxide ($LiNiVO_4$), nickel-substituted lithium

manganese oxide (e.g., $LiMn_{1.5}Ni_{0.5}O_4$), and lithium vanadium cobalt oxide ($LiCoVO_4$), as well as nonstoichiometric compounds formed by partially substituting the compounds listed above with metal elements. Examples of the metal element include one or more selected from the group consisting of Mn, Mg, Ni, Co, Cu, Zn and Ge.

With respect to the other positive electrode active materials, a single type thereof may be used individually or two or more types thereof may be used in combination.

The other positive electrode active material may have, on at least a part of its surface, the coated section described above.

The positive electrode active material particles of the present embodiment are preferably in the form of coated particles in which at least a part of the surface of the positive electrode active material is coated with a conductive material. The use of the coated particles as the positive electrode active material particles enables the battery capacity and high-rate cycling performance to be further enhanced.

The coated particles are preferably coated particles having a compound with an olivine crystal structure as the core section, more preferably coated particles having a compound represented by the formula (1) as the core section, and even more preferably coated particles having lithium iron phosphate as the core section (hereinbelow, also referred to as "coated lithium iron phosphate particles"). These coated particles can further enhance the battery capacity and the cycling performance. In addition, it is particularly preferable that the entire surface of the core section of the coated particles is coated with a conductive material (that is, the coverage is 100%).

The coated particles can be produced by a known method. A method for producing the coated particles is described below by taking the coated lithium iron phosphate particles as an example.

For example, the coated lithium iron phosphate particles can be obtained by a method in which a lithium iron phosphate powder is prepared by following the procedure described in Japanese Patent No. 5098146, and at least a part of the surface of lithium iron phosphate particles in the powder is coated with carbon by following the procedure described in GS Yuasa Technical Report, June 2008, Vol. 5, No. 1, pp. 27-31 and the like.

Specifically, first, iron oxalate dihydrate, ammonium dihydrogen phosphate, and lithium carbonate are weighed to give a specific molar ratio, and these are pulverized and mixed in an inert atmosphere. Next, the obtained mixture is heat-treated in a nitrogen atmosphere to prepare a lithium iron phosphate powder. Then, the lithium iron phosphate powder is placed in a rotary kiln and heat-treated while supplying methanol vapor with nitrogen as a carrier gas to obtain a powder of lithium iron phosphate particles having at least a part of their surfaces coated with carbon.

For example, the particle size of the lithium iron phosphate powder can be adjusted by optimizing the crushing time in the crushing process. The amount of carbon coating the particles of the lithium iron phosphate powder can be adjusted by optimizing the heating time and temperature in the step of implementing heat treatment while supplying methanol vapor. It is desirable to remove the carbon particles not consumed for coating by subsequent steps such as classification and washing.

The amount of the coated particles is preferably 50 % by mass or more, more preferably 80 % by mass or more, and even more preferably 90 % by mass or more, based on the total mass of the positive electrode active material particles. This amount may be 100 % by mass.

The amount of the compound having an olivine type crystal structure is preferably 50 % by mass or more, preferably 80 % by mass or more, and even more preferably 90 % by mass or more, based on the total mass of the positive electrode active material. This amount may be 100 % by mass.

When the coated lithium iron phosphate particles are used, the amount of the coated lithium iron phosphate particles is preferably 50 % by mass or more, more preferably 80 % by mass or more, and even more preferably 90 % by mass or more, based on the total mass of the positive electrode active material particles. This amount may be 100 % by mass.

The amount of the positive electrode active material particles is preferably 90 % by mass or more, more preferably 95 % by mass or more, even more preferably more than 99 % by mass, particularly preferably 99.5 % by mass or more, and may be 100 % by mass, based on the total mass of the positive electrode active material layer 12. When the amount of the positive electrode active material particles is not less than the above lower limit, the battery capacity and the cycling performance can be further enhanced.

The average particle size of the positive electrode active material particles (that is, positive electrode active material powder) is, for example, preferably 0.1 to 20.0 $\mu$m, and more preferably 0.2 to 10.0 $\mu$m. When two or more types of positive electrode active material particles are used, the average particle size of each of such positive electrode active material particles may be within the above range.

The average particle size of the positive electrode active material particles in the present specification is a volume-based median particle size measured using a laser diffraction/scattering particle size distribution analyzer.

The binder that can be contained in the positive electrode active material layer 12 is an organic substance, and examples thereof include polyacrylic acid, lithium polyacrylate, polyvinylidene fluoride, polyvinylidene fluoride-hexafluoropropylene copolymers, styrene butadiene rubbers, polyvinyl alcohol, polyvinyl acetal, polyethylene oxide, polyethylene glycol, carboxymethyl cellulose, polyacrylic nitrile, and polyimide. With respect to the binder, a single type thereof may be used alone or two or more types thereof may be used in combination.

The amount of the binder in the positive electrode active material layer 12 is, for example, preferably 1 % by mass or less, and more preferably 0.5 % by mass or less, based on the total mass of the positive electrode active material layer 12. When the amount of the binder is not more than the above upper limit, the proportion of the substance that does not contribute to the conduction of lithium ions in the positive electrode active material layer 12 is reduced, and the true density of the positive electrode active material layer 12 increases. Further, the proportion of the binder covering the surface of the positive electrode 1 is reduced. As a result, the conductivity of lithium is further enhanced, and the high-rate cycling performance can be further improved.

When the positive electrode active material layer 12 contains a binder, the lower limit of the amount of the binder is preferably 0.1 % by mass or more, based on the total mass of the positive electrode active material layer 12.

That is, when the positive electrode active material layer 12 contains a binder, the amount of the binder is preferably 0.1 to 1 % by mass, and more preferably 0.1 to 0.5 % by mass, based on the total mass of the positive electrode active material layer 12.

Examples of the conducting agent contained in the positive electrode active material layer 12 include carbon materials such as carbon black (e.g., Ketjen black, and acetylene black), graphite, graphene, hard carbon, and carbon nanotube (CNT). With respect to the conducting agent, a single type thereof may be used alone or two or more types thereof may be used in combination. When carbon black is contained as the conducting agent, the amount of carbon black is preferably 0.2 parts by mass or more and less than 5.0 parts by mass, and more preferably 0.4 to 2.0 parts by mass, relative to 100 parts by mass of the total mass of the positive electrode active material (including the mass of the coated section of the active material).

The amount of the conducting agent in the positive electrode active material layer 12 is, for example, preferably 1 parts by mass or less, more preferably 0.5 parts by mass or less, and even more preferably 0.2 part by mass or less, relative to 100 parts by mass of the total mass of positive electrode active material layer 12. It is particularly preferable that the positive electrode active material layer 12 does not contain a conducting agent, and it is desirable that there are no independent conducting agent particles (for example, independent carbon particles).

The "conducting agent" is a conductive material independent of the positive electrode active material, and may include a conductive material having a fibrous form (for example, carbon nanotube) as well as isolated conducting agent particles.

The conducting agent in contact with the positive electrode active material particles in the positive electrode active material layer is not regarded as the conductive material constituting the coated section of the positive electrode active material.

When the amount of the conducting agent is not more than the above upper limit, the proportion of the substance that does not contribute to the conduction of lithium ions in the positive electrode active material layer 12 is reduced, and the true density of the positive electrode active material layer 12 increases. As a result, the high-rate cycling performance can be further improved.

When the conducting agent is incorporated into the positive electrode active material layer 12, the lower limit value of the amount of the conducting agent is appropriately determined according to the type of the conducting agent, and is, for example, more than 0.1 % by mass, based on the total mass of the positive electrode active material layer 12.

That is, when the positive electrode active material layer 12 contains the conducing agent, the amount of the conducing agent is preferably more than 0.1 % by mass and 1 % by mass or less, more preferably more than 0.1 % by mass and 0.5 % by mass or less, and more preferably more than 0.1 % by mass and 0.2 % by mass or less, relative to the total mass of positive electrode active material.

In the context of the present specification, the expression "the positive electrode active material layer 12 does not contain a conducting agent" or similar expression means that the positive electrode active material layer 12 does not substantially contain a conducting agent, and should not be construed as excluding a case where a conducting agent is contained in such an amount that the effects of the present invention are not affected. For example, if the amount of the conducting agent is 0.1 % by mass or less, based on the total mass of the positive electrode active material layer 12, then, it is judged that substantially no conducting agent is contained.

(Positive electrode current collector)

Examples of the material of the positive electrode current collector main body 14 include conductive metals such as copper, aluminum, titanium, nickel, and stainless steel.

The thickness of the positive electrode current collector main body 14 is preferably, for example, 8 to 40 $\mu$m, and more preferably 10 to 25 $\mu$m.

The thickness of the positive electrode current collector main body 14 and the thickness of the positive electrode current collector 11 can be measured using a micrometer. One example of the measuring instrument usable for this purpose is an instrument with the product name "MDH-25M", manufactured by Mitutoyo Co., Ltd.

(Current collector coating layer)

The current collector coating layer 15 contains a conductive material.

The conductive material in the current collector coating layer 15 preferably contains carbon, and more preferably consists exclusively of carbon.

The current collector coating layer 15 is preferred to be, for example, a coating layer containing carbon particles such as carbon black and a binder. Examples of the binder for the current collector coating layer 15 include those listed above as examples of the binder for the positive electrode active material layer 12.

With regard to the production of the positive electrode current collector 11 in which the surface of the positive electrode current collector main body 14 is coated with the current collector coating layer 15, for example, the production can be implemented by a method in which a slurry containing the conductive material, the binder, and a solvent is applied to the surface of the positive electrode current collector main body 14 with a known coating method such as a gravure method, followed by drying to remove the solvent.

The thickness of the current collector coating layer 15 is preferably 0.1 to 4.0 $\mu$m.

The thickness of the current collector coating layer can be measured by a method of measuring the thickness of the coating layer in a transmission electron microscope (TEM) image or a scanning electron microscope (SEM) image of a cross section of the current collector coating layer. The thickness of the current collector coating layer need not be uniform. It is preferable that the current collector coating layer having a thickness of 0.1 $\mu$m or more is present on at least a part of the surface of the positive electrode current collector main body 14, and the maximum thickness of the current collector coating layer is 4.0 $\mu$m or less.

(Method for producing positive electrode)

For example, the positive electrode 1 of the present embodiment can be produced by a method in which a positive electrode composition containing a positive electrode active material, a binder and a solvent is coated on the positive electrode current collector 11, followed by drying to remove the solvent to thereby form a positive electrode active material layer 12. The positive electrode composition may contain a conducting agent.

The thickness of the positive electrode active material layer 12 can be adjusted by a method in which a layered body composed of the positive electrode current collector 11 and the positive electrode active material layer 12 formed thereon is placed between two flat plate jigs and, then, uniformly pressurized in the thickness direction of this layered body. For this purpose, for example, a method of pressurizing using a roll press can be used.

The solvent for the positive electrode composition is preferably a non-aqueous solvent. Examples of the solvent include alcohols such as methanol, ethanol, 1-propanol and 2-propanol; chain or cyclic amides such as N-methylpyrrolidone and N,N-dimethylformamide; and ketones such as acetone. With respect to these solvents, a single type thereof may be used individually or two or more types thereof may be used in combination.

The positive electrode active material layer 12 may include a dispersant. Examples of the dispersant include polyvinylpyrrolidone (PVP), one-shot varnish (manufactured by Toyocolor Co., Ltd.) and the like.

When at least one of the conductive material covering the positive electrode active material and the conducting agent contains carbon, the positive electrode 1 preferably has a conductive carbon content of 0.5 to 3.5 % by mass, more preferably 1.5 to 3.0 % by mass with respect to the mass of the positive electrode 1 excluding the positive electrode current collector main body 14.

When the positive electrode 1 is composed of the positive electrode current collector main body 14 and the positive electrode active material layer 12, the mass of the positive electrode 1 excluding the positive electrode current collector main body 14 is the mass of the positive electrode active material layer 12.

When the positive electrode 1 is composed of the positive electrode current collector main body 14, the current collector coating layer 15, and the positive electrode active material layer 12, the mass of the positive electrode 1 excluding the positive electrode current collector main body 14 is the sum of the mass of the current collector coating layer 15 and the mass of the positive electrode active material layer 12.

When the conductive carbon content based the total mass of the positive electrode active material layer 12 is within the above range, the battery capacity can be further improved, and a non-aqueous electrolyte secondary battery with a further improved cycling performance can be realized.

The amount of the conductive carbon with respect to the mass of the positive electrode 1 excluding the positive electrode current collector main body 14 can be measured by <<Method for measuring conductive carbon content>> described below with respect to a dried product (powder), as a measurement target, obtained by detaching the whole of a layer present on the positive electrode current collector main body 14, collecting the whole of substance resulting from the detached layer, and vacuum-drying the collected substance at 120 °C.

The conductive carbon to be measured by the <<Method for measuring conductive carbon content>> described below includes carbon in the coated section of the active material, carbon in the conducting agent, and carbon in the current collector coating layer 15. Carbon in the binder is not included in the conductive carbon to be measured.

As a method for obtaining the measurement target, for example, the following method can be adopted.

First, the layer (powder) present on the positive electrode current collector main body 14 is completely detached by a method in which the positive electrode 1 is punched to obtain a piece having a predetermined size, and the piece of the positive electrode current collector main body 14 is immersed in a solvent (for example, N-methylpyrrolidone) and stirred. Next, after confirming that no powder remains attached to the positive electrode current collector main body 14, the positive electrode current collector main body 14 is taken out from the solvent to obtain a suspension (slurry) containing the detached powder and the solvent. The obtained suspension is dried at 120 °C to completely volatilize the solvent to obtain the desired measurement target (powder).

When at least one of the conductive material covering the positive electrode active material and the conducting agent contains carbon (conductive carbon), the conductive carbon content is preferably 0.5 to 5.0 % by mass, and preferably 1.0 to 3.5 % by mass, even more preferably 1.5 to 3.0 % by mass, based on the total mass of the positive electrode active material layer 12.

The conductive carbon content based the total mass of the positive electrode active material layer 12 can be measured by <<Method for measuring conductive carbon content >> described below with respect to a dried product (powder), as a measurement target, obtained by vacuum-drying, at 120 °C, the positive electrode active material layer 12 detached from the current collector.

The conductive carbon to be measured by the <<Method for measuring conductive carbon content>> described below includes carbon in the conductive material covering the positive electrode active material, and carbon in the conducting agent. Carbon in the binder is not included in the conductive carbon to be measured.

When the conductive carbon content based the total mass of the positive electrode active material layer 12 is within the above range, the battery capacity can be further improved, and a non-aqueous electrolyte secondary battery with a further improved cycling performance can be realized.

<<Method for measuring conductive carbon content>>

(Measurement method A)

A sample having a weight w1 is taken from a homogeneously mixed product of the measurement target, and the sample is subjected to thermogravimetry differential thermal analysis (TG-DTA) implemented by following step A1 and step A2 defined below, to obtain a TG curve. From the obtained TG curve, the following first weight loss amount M1 (unit: % by mass) and second weight loss amount M2 (unit: % by mass) are obtained. By subtracting M1 from M2, the conductive carbon content (unit: % by mass) is obtained.

Step A1: A temperature of the sample is raised from 30 °C to 600 °C at a heating rate of 10 °C/min and holding the temperature at 600 °C for 10 minutes in an argon gas stream of 300 mL/min to measure a resulting mass w2 of the sample, from which a first weight loss amount M1 is determined by formula (a1):

$$M1 = (w1 - w2)/w1 \times 100 \qquad (a1)$$

Step A2: Immediately after the step A1, the temperature is lowered from 600 °C to 200 °C at a cooling rate of 10 °C/min and held at 200 °C for 10 minutes, followed by completely substituting the argon gas stream with an oxygen gas stream. The temperature is raised from 200 °C to 1000 °C at a heating rate of 10 °C/min and held at 1000 °C for 10 minutes in an oxygen gas stream of 100 mL/min to measure a resulting mass w3 of the sample, from which a second weight loss amount M2 (unit: % by mass) is calculated by formula (a2):

$$M2 = (w1 - w3)/w1 \times 100 \qquad (a2).$$

(Measurement method B)

0.0001 mg of a precisely weighed sample is taken from a homogeneously mixed product of the measurement target, and the sample is burnt under burning conditions defined below to measure an amount of generated carbon dioxide by a CHN elemental analyzer, from which a total carbon content M3 (unit: % by mass) of the sample is determined. Also, a first weight loss amount M1 is determined following the procedure of the step A1 of the measurement method A. By subtracting M1 from M3, the conductive carbon content (unit: % by mass) is obtained.

(Burning conditions)

Temperature of combustion furnace: 1150 °C.
Temperature of reduction furnace: 850 °C.
Helium flow rate: 200 mL / min.
Oxygen flow rate: 25 to 30 mL/min.

(Measurement method C)

The total carbon content M3 (unit: % by mass) of the sample is measured in the same manner as in the above measurement method B. Further, the carbon amount M4 (unit: % by mass) of carbon derived from the binder is determined by the following method. M4 is subtracted from M3 to determine a conductive carbon content (unit: % by mass).

When the binder is polyvinylidene fluoride (PVDF: monomer ($CH_2CF_2$), molecular weight 64), the conductive carbon content can be calculated by the following formula from the fluoride ion ($F^-$) content (unit: % by mass) measured by combustion ion chromatography based on the tube combustion method, the atomic weight (19) of fluorine in the monomers constituting PVDF, and the atomic weight (12) of carbon in the PVDF.

$$\text{PVDF content (unit: \% by mass)} = \text{fluoride ion content (unit: \% by mass)} \times 64/38$$

PVDF-derived carbon amount M4 (unit: % by mass) = fluoride ion content (unit: % --> by mass) $\times$ 12/19

The presence of polyvinylidene fluoride as a binder can be verified by a method in which a sample or a liquid obtained by extracting a sample with an N,N-dimethylformamide (DMF) solvent is subjected to Fourier transform infrared spectroscopy (FT-IR) to confirm the absorption attributable to the C-F bond. Such verification can be also implemented by $^{19}$F-NMR measurement.

When the binder is identified as being other than PVDF, the carbon amount M4 attributable to the binder can be calculated by determining the amount (unit: % by mass) of the binder from the measured molecular weight, and the carbon content (unit: % by mass).

Depending on the composition of the positive electrode active material and the like, an appropriate method can be selected from [Measurement method A] to [Measurement method C] to determine the conductive carbon content, but it is preferable to determine the conductive carbon content by the [Measurement method B] in terms of versatility, etc.

These methods are described in the following publications:

Toray Research Center, The TRC News No. 117 (Sep. 2013), pp. 34-37, [Searched on February 10, 2021], Internet <https://www.toray-research.co.jp/technical-info/trcnews/pdf/TRC117(34-37).pdf >
TOSOH Analysis and Research Center Co., Ltd., Technical Report No. T1019 2017.09.20, [Searched on February 10, 2021], Internet <http://www.tosoh-arc.co.jp/techrepo/files/tarc00522/T1719N.pdf>

<<Analytical method for conductive carbon>>

The conductive carbon in the coated section of the active material of the positive electrode active material and the conductive carbon as the conducting agent can be distinguished by the following analytical method.

For example, particles in the positive electrode active material layer are analyzed by a combination of transmission electron microscopy-electron energy loss spectroscopy (TEM-EELS), and particles having a carbon-derived peak around 290 eV only near the particle surface can be judged to be the positive electrode active material. On the other hand, particles having a carbon-derived peak inside the particles can be judged to be the conducting agent. In this context, "near the particle surface" means a region to the depth of 100 nm from the particle surface, while "inside" means an inner region positioned deeper than the "near the particle surface".

As another method, the particles in the positive electrode active material layer are analyzed by Raman spectroscopy mapping, and particles showing carbon-derived G-band and D-band as well as a peak of the positive electrode active material-derived oxide crystals can be judged to be the positive electrode active material. On the other hand, particles showing only G-band and D-band can be judged to be the conducting agent. In this context, a trace amount of carbon considered to be an impurity and a trace amount of carbon unintentionally removed from the surface of the positive electrode active material during production are not judged to be the conducting agent.

Using any of these methods, it is possible to verify whether or not the conducting agent formed of carbon material is contained in the positive electrode active material layer.

(Thickness of positive electrode active material layer)

The thickness of the positive electrode active material layer 12 (total thickness of the positive electrode active material layers in the case where the positive electrode active material layers are formed on both sides of the positive electrode current collector) in the electrode of the present embodiment is 10 $\mu$m or more. The thickness of the positive electrode active material layer 12 is preferably 30 $\mu$m or more, and more preferably 50 $\mu$m or more. The upper limit of the thickness of the positive electrode active material layer 12 is not particularly limited, but may be, for example, 500 $\mu$m or less, 400 $\mu$m or less, or 300 $\mu$m or less. The thickness of the positive electrode active material layer 12 is preferably 10 to 500 $\mu$m, more preferably 30 to 400 $\mu$m, and even more preferably 50 to 300 $\mu$m. When the thickness of the positive electrode active material layer 12 is 10 $\mu$m or more, the positive electrode active material layer 12 ban be formed sufficiently thicker than the thickness of the current collector, and the energy density of the battery can be increased. When the thickness of the positive electrode active material layer 12 is 10 $\mu$m or more, even when the positive electrode active material layer 12 is porous, the reflectance of the surface of the positive electrode active material layer 12 can be measured without being affected by the reflectance of the positive electrode current collector 11.

The thickness of the positive electrode active material layer 12 can be measured by the following method. The thicknesses of the positive electrode 1 and the positive electrode current collector 11 are each measured with a micrometer, and the difference between these two thickness values is calculated as the thickness of the positive electrode active material layer 12. With respect to the thickness of the positive electrode 1 and the thickness of the positive electrode current collector 11, each of these thickness values is an average value of the thickness values measured at five or more randomly chosen points (sufficiently separated from each other). The thickness of the positive electrode current collector 11 may be measured at the exposed section 13 of the positive electrode current collector, which is described below.

(Reflectance of surface of positive electrode active material layer)

In positive electrode 1 of the present embodiment, the reflectance of the surface of the positive electrode active material layer 12 is 5.5 % or higher in the wave length range of 200 nm to 800 nm, and is not higher than the reflectance in the wavelength range of 200 nm to 850 nm peculiar to the positive electrode active material contained in the positive electrode active material layer 12. The reflectance is preferably 5.8 % or higher, and more preferably 6.0 % or higher. The upper limit of the reflectance is not particularly limited, but may be, for example, 30 % or less, 25 % or less, or 20 % or less. The reflectance is preferably 5.5 to 30 %, more preferably 5.8 to 25 %, and even more preferably 6.0 to 20 %. When the reflectance is not less than the lower limit value, the proportion of the substance that does not contribute to the conduction of lithium ions is reduced on the surface of the positive electrode active material layer 12, so that it is possible to suppress the inhibition of the conduction of lithium ions. As a result, the positive electrode 1 has excellent discharge performance in a low temperature range. Further, when the proportion of the substance that does not contribute to the conduction of lithium ions is reduced on the surface of the positive electrode active material layer 12 is reduced, proportion of the positive electrode active material increases on the surface of the positive electrode active material layer 12, so that the reflectance is not higher than the reflectance peculiar to the positive electrode active material contained in the positive electrode active material layer 12.

In the positive electrode 1 of the present embodiment, the blending amount of the positive electrode active material in the positive electrode active material layer 12 is increased in order to keep the reflectance of the surface of the positive electrode active material layer 12 within the above range.

The method for measuring the reflectance of the surface of the positive electrode active material layer 12 is evaluated by measuring the spectral reflectance of the surface of the positive electrode active material layer 12.

For the measurement of the spectral reflectance, for example, the spectrophotometer U-4100 (with a 5° specular reflection accessory) manufactured by Hitachi, Ltd. is used. Light sources to be used are a deuterium lamp for radiation in the ultraviolet range and a 50 W halogen lamp for radiation in the visible/near infrared range. Detectors to be used are a photomultiplier tube for detection in the ultraviolet/ visible range and a cooling type PbS for detection in the near infrared range. The measurement range is 200 nm-850 nm. The sample size is 15 mm x 15 mm.

The spectral reflectance of the surface of the positive electrode active material layer 12 is measured with respect to the positive electrode which is in a completely discharged state. Alternatively, the positive electrode is discharged to 2.0 V vs Li/Li$^+$.

The reflectance of only the conductive carbon material is evaluated by measuring the reflectance of the thin film obtained by a method in which a slurry obtained by mixing 100 parts by mass of carbon black, 40 parts by mass of polyvinylidene fluoride as a binder, and N-methylpyrrolidone (NMP) as a solvent is applied to the positive electrode current collector main body 14, followed by drying. The amount of NMP used is the amount required for applying the slurry.

The surface reflection of the positive electrode active material layer 12 is affected by the surface roughness;

however, in general, the surface of the electrode is smoothed by being pressed, so that the influence of diffused reflection is suppressed to a low level. Further, in this measurement, the incident angle is set to 5° and is almost vertical, so that the reflectance peculiar to the material can be stably measured.

Further, when the thickness of the positive electrode active material layer 12 is less than several $\mu$m, the reflected light from the positive electrode current collector main body 14 may be included. However, in the present embodiment, the surface reflection of the positive electrode active material layer 12 reflects only the spectrum of the reflected light from the surface of the positive electrode active material layer 12 since the positive electrode, which includes the positive electrode active material layer 12 having a thickness of 10 $\mu$m or more, is the measurement target.

The method for measuring the reflectance peculiar to the positive electrode active material contained in the positive electro active material layer 12 is as follows.

The reflectance peculiar to the positive electrode active material is evaluated by measuring the reflectance of the thin film obtained by a method in which a slurry containing only the positive electrode active material is applied to the positive electrode current collector main body, followed by drying.

The measurement of the reflectance peculiar to the positive electrode active material is performed in the same manner as the measurement of the reflectance on the surface of the positive electrode active material layer 12. When the positive electrode active material layer 12 contains multiple types of positive electrode active materials, the reflection peculiar to the positive electrode active material is evaluated by measuring the reflectance of a thin film obtained by a method in which a slurry of mixture of these positive electrode active materials is applied to the positive electrode current collector main body, followed by drying.

In the positive electrode 1 of the present embodiment, when the positive electrode active material contains the compound represented by the formula (1), the reflectance of the surface of the positive electrode active material layer 12 is preferably 9 % or higher in the wavelength range of 250 nm to 300 nm, and is not higher than the reflectance in the wavelength range of 250 nm to 300 nm peculiar to the positive electrode active material contained in the positive electrode active material layer 12. The reflectance is more preferably 9 % or higher, and even more preferably 10 % or higher. The upper limit of the reflectance is not particularly limited, but may be, for example, 17 % or less, 15 % or less, or 13 % or less. The reflectance is preferably 9 to 17 %, more preferably 10 to 15 %, and even more preferably 11 to 13 %. When the reflectance is not less than the lower limit value, the proportion of the substance that does not contribute to the conduction of lithium ions is more reduced, so that it is possible to further suppress the inhibition of the conduction of lithium ions. Further, when the proportion of the substance that does not contribute to the conduction of lithium ions is reduced on the surface of the positive electrode active material layer 12 is reduced, proportion of the positive electrode active material increases on the surface of the positive electrode active material layer 12, so that the reflectance is not higher than the reflectance peculiar to the positive electrode active material contained in the positive electrode active material layer 12.

In the positive electrode 1 of the present embodiment, the reflectance of the surface of the positive electrode active material layer 12 is preferably 6 % or higher in the wavelength range of 400 nm to 450 nm, and is not higher than the reflectance in the wavelength range of 400 nm to 450 nm peculiar to the positive electrode active material contained in the positive electrode active material layer 12. The reflectance is more preferably 7 % or higher, and even more preferably 8 % or higher. The upper limit of the reflectance is not particularly limited, but may be, for example, 15 % or less, 12 % or less, or 10 % or less. The reflectance is preferably 6 to 15 %, more preferably 7 to 12 %, and even more preferably 8 to 10 %. When the reflectance is not less than the lower limit value, the proportion of the substance that does not contribute to the conduction of lithium ions is more reduced, so that it is possible to further suppress the inhibition of the conduction of lithium ions. Further, when the proportion of the substance that does not contribute to the conduction of lithium ions is reduced on the surface of the positive electrode active material layer 12 is reduced, proportion of the positive electrode active material increases on the surface of the positive electrode active material layer 12, so that the reflectance is not higher than the reflectance peculiar to the positive electrode active material contained in the positive electrode active material layer 12.

In the positive electrode 1 of the present embodiment, the potential measured by the following test method is preferably 7.5 V or higher. The potential is more preferably 7.8 V or higher, and even more preferably 8 V or higher. The upper limit of the potential is not particularly limited, but may be, for example, 12 V or less, 11 V or less, or 10 V or less. The potential is preferably 7.5 to 12V, more preferably 7.8 to 11V, and even more preferably 8 to 10V.

(Test method]

Four non-aqueous electrolyte secondary batteries are connected in series and in a fully charged state to discharge at 1 C rate for 30 seconds, and potential is measured, in which each of the non-aqueous electrolyte secondary batteries is manufactured using the positive electrode so as to have a rated capacity of 1 Ah.

According to the positive electrode 1 of the present embodiment, the reflectance of the surface of the positive electrode active material layer 12 is 5.5 % or higher in the wavelength range of 200 nm to 850 nm, and is not higher than the reflectance in the wavelength range of 200 nm to 850 nm peculiar to the positive electrode active material contained in the positive electrode active material layer12. Therefore, the proportion of substance that does not contribute to the conduction of lithium ions is small on the surface of the positive electrode active material layer 12, so that the discharge performance in the low temperature range is excellent. That is, the positive electrode 1 of the present embodiment has excellent cold cranking performance in a low temperature range, and in particular, is capable of suppressing the resistance increase after initiating the operation of a battery using the positive electrode 1, whereby the positive electrode 1 enables the battery to be used stably for a long period of time.

Conventionally, the conductive material such as carbon that covers the surface of the positive electrode material, the conducting agent, the binder, and other additives are usually segregated on the surface of the positive electrode active material layer constituting the positive electrode. When the conductive material or the binder is segregated on the surface of the positive electrode active material layer, the interfacial resistance increases, which adversely affects the battery performance. In particular, with respect to the discharge performance in the low temperature range, the ionic conduction of the positive electrode active material existing near the surface of the positive electrode material layer, which is closest to the negative electrode side, is hindered, the performance is adversely affected, and a problem arises in terms of the potential drop at the initial stage of discharge (IR drop due to DC resistance). The positive electrode 1 of the present embodiment has solved the above problem, by employing a configuration in which the reflectance of the surface of the positive electrode active material layer 12 is 5.5 % or higher in the wavelength range of 200 nm to 850 nm, and is not higher than the reflectance in the wavelength range of 200 nm to 850 nm peculiar to the positive electrode active material contained in the positive electrode active material layer 12, thereby reducing the proportion of substance that does not contribute to the conduction of lithium ions on the surface of the positive electrode active material layer 12.

<Non-aqueous electrolyte secondary battery>

The non-aqueous electrolyte secondary battery 10 of the present embodiment shown in FIG. 2 includes a positive electrode 1 of the present embodiment, a negative electrode 3, and a non-aqueous electrolyte. Further, a separator 2 may be provided. Reference numeral 5 in FIG. 1 denotes an outer casing.

In the present embodiment, the positive electrode 1 has a plate-shaped positive electrode current collector 11 and positive electrode active material layers 12 provided on both surfaces thereof. The positive electrode active material layer 12 is present on a part of each surface of the positive electrode current collector 11. The edge of the surface of the positive electrode current collector 11 is an exposed section 13 of the positive electrode current collector, which is free of the positive electrode active material layer 12. A terminal tab (not shown) is electrically connected to an arbitrary portion of the exposed section 13 of the positive electrode current collector.

The negative electrode 3 has a plate-shaped negative electrode current collector 31 and negative electrode active material layers 32 provided on both surfaces thereof. The negative electrode active material layer 32 is present on a part of each surface of the negative electrode current collector 31. The edge of the surface of the negative electrode current collector 31 is an exposed section 33 of the negative electrode current collector, which is free of the negative electrode active material layer 32. A terminal tab (not shown) is electrically connected to an arbitrary portion of the exposed section 33 of the negative electrode current collector.

The shapes of the positive electrode 1, the negative electrode 3 and the separator 2 are not particularly limited. For example, each of these may have a rectangular shape in a plan view.

With regard to the production of the non-aqueous electrolyte secondary battery 10 of the present embodiment, for example, the production can be implemented by a method in which the positive electrode 1 and the negative electrode 3 are alternately interleaved through the separator 2 to produce an electrode layered body, which is then packed into an outer casing such as an aluminum laminate bag, and a non-aqueous electrolyte (not shown) is injected into the outer casing, followed by sealing the outer casing.

FIG. 2 shows a representative example of a structure of the battery in which the negative electrode, the separator, the positive electrode, the separator, and the negative electrode are stacked in this order, but the number of electrodes can be altered as appropriate. The number of the positive electrode 1 may be one or more, and any number of positive electrodes 1 can be used depending on a desired battery capacity. The number of each of the negative electrode 3 and the separator 2 is larger by one sheet than the number of the positive electrode 1, and these are stacked so that the negative electrode 3 is located at the outermost layer.

(Negative electrode)

The negative electrode active material layer 32 includes a negative electrode active material. Further, the negative electrode active material layer 32 may further include a binder. Furthermore, the negative electrode active material layer 32 may include a conducting agent as well. The shape of the negative electrode active material is preferably particulate.

For example, the negative electrode 3 can be produced by a method in which a negative electrode composition containing a negative electrode active material, a binder and a solvent is prepared, and coated on the negative electrode current collector 31, followed by drying to remove the solvent to thereby form a negative electrode active material layer 32. The negative electrode composition may contain a conducting agent.

Examples of the negative electrode active material and the conducting agent include carbon materials such as graphite, graphene, hard carbon, Ketjen black, acetylene black, and carbon nanotube (CNT). With respect to each of the negative electrode active material and the conducting agent, a single type thereof may be used alone or two or more types thereof may be used in combination.

Examples of the material of the negative electrode current collector 31, the binder and the solvent in the negative electrode composition include those listed above as examples of the material of the positive electrode current collector 11, the binder and the solvent in the positive electrode composition. With respect to each of the binder and the solvent in the negative electrode composition, a single type thereof may be used alone or two or more types thereof may be used in combination.

The sum of the amount of the negative electrode active material and the amount of the conducting agent is preferably 80.0 to 99.9 % by mass, and more preferably 85.0 to 98.0 % by mass, based on the total mass of the negative electrode active material layer 32.

(Separator)

The separator 2 is disposed between the negative electrode 3 and the positive electrode 1 to prevent a short circuit or the like. The separator 2 may retain a non-aqueous electrolyte described below.

The separator 2 is not particularly limited, and examples thereof include a porous polymer film, a non-woven fabric, and glass fiber.

An insulating layer may be provided on one or both surfaces of the separator 2. The insulating layer is preferably a layer having a porous structure in which insulating fine particles are bonded with a binder for an insulating layer.

The separator 2 may contain various plasticizers, antioxidants, and flame retardants.

Examples of the antioxidant include phenolic antioxidants such as hindered-phenolic antioxidants, monophenolic antioxidants, bisphenolic antioxidants, and polyphenolic antioxidants; hinderedamine antioxidants; phosphorus antioxidants; sulfur antioxidants; benzotriazole antioxidants; benzophenone antioxidants; triazine antioxidants; and salicylate antioxidants. Among these, phenolic antioxidants and phosphorus antioxidants are preferable.

(Non-aqueous electrolyte)

The non-aqueous electrolyte fills the space between the positive electrode 1 and the negative electrode 3. For example, any of known non-aqueous electrolytes used in lithium ion secondary batteries, electric double layer capacitors and the like can be used. As the non-aqueous electrolyte, a non-aqueous electrolyte solution in which an electrolyte salt is dissolved in an organic solvent is preferable.

The organic solvent is preferably one having tolerance to high voltage. Examples of the organic solvent include polar solvents such as ethylene carbonate, propylene carbonate, dimethyl carbonate, diethyl carbonate, ethyl methyl carbonate, $\gamma$-butyrolactone, sulfolane, dimethyl sulfoxide, acetonitrile, dimethylformamide, dimethylacetamide, 1,2-dimethoxyethane, 1,2-diethoxyethane, tetrohydrafuran, 2-methyltetrahydrofuran, dioxolane, and methyl acetate, as well as mixtures of two or more of these polar solvents.

The electrolyte salt is not particularly limited, and examples thereof include lithium-containing salts such as $LiClO_4$, $LiPF_6$, $LiBF_4$, $LiAsF_6$, $LiCF_6$, $LiCF_3CO_2$, $LiPF_6SO_3$, $LiN(SO_2F)_2$, $LiN(SO_2CF_3)_2$, $Li(SO_2CF_2CF_3)_2$, $LiN(COCF_3)_2$, and $LiN(COCF_2CF_3)_2$, as well as mixture of two or more of these salts.

The non-aqueous electrolyte secondary battery of this embodiment can be used as a lithium ion secondary battery for various purposes such as industrial use, consumer use, automobile use, and residential use.

The application of the non-aqueous electrolyte secondary battery of this embodiment is not particularly limited. For example, the battery can be used in a battery module configured by connecting a plurality of non-aqueous electrolyte secondary batteries in series or in parallel, a battery pack including a plurality of electrically connected battery modules and a battery control system, a storage battery system including a plurality of electrically connected battery modules and a battery control system, and the like.

**Examples**

Hereinbelow, the present invention will be described with reference to Examples which, however, should not be construed as limiting the present invention.

<Measurement method in Examples A1 to A11>

(Measurement method of pore specific surface area and central pore diameter)

Using the pore diameter distribution measuring device (product name: Autopore V9620, manufactured by Micromeritics) by the mercury intrusion method, the pretreated sample was placed in the measurement cell, and the pore diameter distribution was measured under the following conditions. The pore specific surface area and the central pore diameter were determined based on the obtained the pore diameter distribution.

The pore specific surface area was calculated as the pore specific surface area (unit: $m^2/g$) per unit mass of the balance (positive electrode active material layer 12) obtained by excluding the positive electrode current collector 11 from the sample (positive electrode).

As the central pore diameter (D50), the median diameter (unit: $\mu$m) in the range of the pore diameter of 0.003 to 1.000 $\mu$m in the pore diameter distribution was determined.

(Measurement condition)

Sample pretreatment: The positive electrode sheet was vacuum dried at 110 °C for 12 hours and then cut into strips (about 25 mm x about 12.5 mm) of about 1.6 g.
Measurement cell volume: 5 mL
Initial pressure: 7.3 kPa.
Mercury parameters: Mercury contact angle 130.0 °, mercury surface tension 485.0 dyn/cm.

(Volume density measuring method)

The thickness of the positive electrode sheet and the thickness of the positive electrode current collector at its exposed section 13 were measured using a micrometer. Each thickness was measured at 5 randomly chosen points, and an average value was calculated.

5 sheets of measurement samples were prepared by punching the positive electrode sheet into circles with a diameter of 16 mm.

Each measurement sample was weighed with a precision balance, and the mass of the positive electrode active material layer 12 in the measurement sample was calculated by subtracting the mass of the positive electrode current collector 11 measured in advance from the measurement result. The volume density of the positive electrode active material layer was calculated from the average value of measured values by the above formula (1).

<Evaluation method in Examples A1 to Al l>

(High-rate cycling test)

The capacity retention was evaluated following the procedures (1) to (7) below.

(1) A non-aqueous electrolyte secondary battery (cell) was manufactured so as to have a rated capacity of 1 Ah, and a cycling evaluation was carried out at room temperature (25 °C).

(2) The obtained cell was charged at a constant current rate of 0.2 C (that is, 200 mA) and with a cut-off voltage of 3.6 V, and then charged at a constant voltage with a cut-off current set at 1/10 of the above-mentioned charge current (that is, 20 mA).

(3) The cell was discharged for capacity confirmation at a constant current rate of 0.2 C and with a cut-off voltage of 2.5 V in an environment of 25 °C. The discharge capacity at this time was set as the reference capacity, and the reference capacity was set as the current value at 1 C rate (that is, 1,000 mA).

(4) After charging the cell at a constant current at a cell's 3 C rate (that is, 3000 mA) and with a cut-off voltage of 3.8 V, a 10-second pause was provided. From this state, the cell was discharged at 3 C rate and with a cut-off voltage of 2.0 V, and a 10-second pause was provided.

(5) The cycling test of (4) was repeated 1,000 times.

(6) After performing the same charging as in (2), the same capacity confirmation as in (3) was performed.

(7) By dividing the discharge capacity in the capacity confirmation measured in (6) by the reference capacity before the cycling test to obtain a capacity retention after 1,000 cycles in terms of percentage (1,000 cycle capacity retention, unit: %).

<Production Example 1: Production of negative electrode>

100 parts by mass of artificial graphite as a negative electrode active material, 1.5 parts by mass of styrene-butadiene rubber as a binder, 1.5 parts by mass of carboxymethyl cellulose Na as a thickener, and water as a solvent were mixed, to thereby obtain a negative electrode composition having a solid content of 50 % by mass.

The obtained negative electrode composition was applied onto both sides of a copper foil (thickness 8 $\mu$m) and vacuum dried at 100 °C. Then, the resulting was pressure-pressed under a load of 2 kN to obtain a negative electrode sheet. The obtained negative electrode sheet was punched to obtain a negative electrode.

<Examples A1 to A11>

Examples A1 to A6 and A8 are implementation of the present invention, while examples A7 and A9 to A11 are comparative examples.

A carbon-coated lithium iron phosphate (hereinbelow, also referred to as "carbon-coated active material") with an average particle size of 1.0 $\mu$m and a carbon content of 1 % by mass was used as a positive electrode active material.

Carbon black, graphite, or carbon nanotube (CNT) was used as the conducting agent.

Polyvinylidene fluoride (PVDF) was used as binder.

(Example A1)

First, a positive electrode current collector 11 was prepared by coating both the front and back surfaces of a positive electrode current collector main body 14 with current collector coating layers 15 by the following method. An aluminum foil (thickness 15 $\mu$m) was used as the positive electrode current collector main body 14.

A slurry was obtained by mixing 100 parts by mass of carbon black, 40 parts by mass of polyvinylidene fluoride as a binder, and N-methylpyrrolidone (NMP) as a solvent. The amount of NMP used was the amount required for applying the slurry.

The obtained slurry was applied to both sides of the positive electrode current collector main body 14 by a gravure method so as to allow the resulting current collector coating layers 15 after drying (total of layers on both sides) to have a thickness of 2 $\mu$m, and dried to remove the solvent, thereby obtaining a positive electrode current collector 11. The current collector coating layers 15 on both surfaces were formed so as to have the same amount of coating and the same thickness.

Next, a positive electrode active material layer 12 was formed by the following method. As shown in Table 1, 100 parts by mass of carbon-coated active material, 0.5 parts by mass of carbon black, 1.0 parts by mass of PVDF as a binder, and NMP as a solvent were mixed with the mixer to obtain a positive electrode composition. The amount of the solvent used was the amount required for applying the positive electrode composition.

The positive electrode composition was applied on both sides of the positive electrode current collector 11, and after pre-drying, the applied composition was vacuum-dried at 120 °C to form positive electrode active material layers 12. The amount of the applied positive electrode composition is shown in Table 2 (the same applies to the other examples). The resulting laminate was pressure-pressed with a load of 10 kN to obtain a positive electrode sheet. Examples 1 to 11 in Tables 1 and 2 correspond to Examples A1 to A11.

Using the obtained positive electrode sheet as a sample, the pore specific surface area, the central pore diameter (D50), and the volume density were measured.

The carbon content and compounding amount of the carbon-coated active material, and the carbon content and compounding amount of the conducting agent were used to calculate the conductive carbon content with respect to the total mass of the positive electrode active material layer. The conducting agent was regarded as having an impurity content of less than the quantification limit and a carbon content of 100 % by mass. The amount of conductive carbon with respect to the total mass of the positive electrode active material layer can also be confirmed by using the method described in the <<Method for measuring conductive carbon content>> described above.

The thickness value of the positive electrode active material layer, the amount of the conductive carbon in the positive electrode active material layer, the thickness value of the current collector coating layer, and the amount of carbon black (its carbon content was assumed to be 100 % by mass) in the current collector coating layer were used to calculate the amount of conductive carbon with respect to the mass of the positive electrode 1 excluding the positive electrode current collector main body 14. The amount of conductive carbon with respect to the mass of the positive electrode 1 excluding the positive electrode current collector main body 14 can also be confirmed by using the method described in the <<Method for measuring conductive carbon content>> described above.

These results are shown in Table 2 (the same applies to the other examples). In Table 2, the coating amount of the positive electrode composition and the thickness of the positive electrode active material layer are total values with respect to the positive electrode active material layers 12 on both sides of the positive electrode current collector 11. The positive electrode active material layers 12 on both surfaces of the positive electrode current collector 11 were formed so as to have the same coating amount and the same thickness.

The obtained positive electrode sheet was punched to obtain a positive electrode.

A non-aqueous electrolyte secondary battery having a configuration shown in FIG. 2 was manufactured by the following method.

$LiPF_6$ as an electrolyte was dissolved at 1 mol/L in a solvent in which ethylene carbonate (EC) and diethyl carbonate (DEC) were mixed at a volume ratio, EC : DEC, of 3 : 7, to thereby prepare a non-aqueous electrolytic solution.

The positive electrode obtained in this example and the negative electrode obtained in Production Example 1 were alternately interleaved through a separator to prepare an electrode layered body with its outermost layer being the negative electrode. A polyolefin film (thickness 15 $\mu$m) was used as the separator.

In the step of producing the electrode layered body, the separator 2 and the positive electrode 1 were first stacked, and then the negative electrode 3 was stacked on the separator 2.

Terminal tabs were electrically connected to the exposed section 13 of the positive electrode current collector and the exposed section 33 of the negative electrode current collector in the electrode layered body, and the electrode layered body was put between aluminum laminate films while allowing the terminal tabs to protrude to the outside. Then, the resulting was laminate-processed and sealed at three sides.

To the resulting structure, a non-aqueous electrolytic solution was injected from one side left unsealed, and this one side was vacuum-sealed to manufacture a non-aqueous electrolyte secondary battery (laminate cell).

The high-rate cycling test was carried out by the above method to measure the 1,000-cycle capacity retention. The results are shown in Table 2 (the same applies to the other examples).

(Examples A2 and A3)

The load for the pressure-press was changed from that in Example A1 so as to give a volume density shown in Table 2.

Otherwise, a positive electrode was produced in the same manner as in Example A1, and a secondary battery was manufactured and evaluated in the same manner as in Example A1.

(Examples A4, A5, A7, A9, and A11)

The blending ratio for the positive electrode composition was changed from that in Example A1 so as to give a conductive carbon content shown in Table 2. The coating amount and the load for the pressure-press were adjusted so as to give a volume density shown in Table 2.

Otherwise, a positive electrode was produced in the same manner as in Example A1, and a secondary battery was manufactured and evaluated in the same manner as in Example A1.

(Example A6)

A positive electrode was produced in the same manner as in Example A5 except that the current collector coating layer 15 was not provided, and a secondary battery was manufactured and evaluated in the same manner as in Example A5.

(Example 8)

The conducting agent was omitted and the coating amount and the load for the pressure-press were adjusted from those in Example A1 so as to give a volume density shown in Table 2.

Otherwise, a positive electrode was produced in the same manner as in Example A1, and a secondary battery was manufactured and evaluated in the same manner as in Example A1.

(Example 10)

In Example A1, after preparing the positive electrode composition, as an additional step, the positive electrode composition was subjected to high-pressure dispersion treatment with the nanoparticle dispersion mixer (product name Philmix manufactured by Primix Corporation).

Using the positive electrode composition after the high-pressure dispersion treatment, the positive electrode active material layer 12 was formed in the same manner as in Example A1. Further, the coating amount and the load for the pressure-press were adjusted so as to give a volume density shown in Table 2.

Otherwise, a positive electrode was produced in the same manner as in Example A1, and a secondary battery was manufactured and evaluated in the same manner as in Example A1.

[Table 1]

| | BLENDING AMOUNT 0F POSITIVE ELECTRODE COMPOSITION (PARTS BY MASS) | | | | | |
|---|---|---|---|---|---|---|
| | CARBON -COATED ACTIVE MATERIAL | CONDUCTING AGENT | | | BINDER | SOLVENT |
| | | CARBON BLACK | GRAPHITE | CNT | | |
| Ex. 1 | 100 | 0.5 | - | - | 1.0 | NECESSARY AMOUNT |
| Ex. 2 | 100 | 0.5 | - | - | 1.0 | |
| Ex. 3 | 100 | 0.5 | - | - | 1.0 | |
| Ex. 4 | 100 | - | 2.0 | - | 1.0 | |
| Ex. 5 | 100 | - | 1.0 | 1.0 | 1.0 | |
| Ex. 6 | 100 | - | 1.0 | 1.0 | 1.0 | |
| Ex. 7 | 100 | - | 3.5 | - | 1.0 | |
| Ex. 8 | 100 | - | - | - | 1.0 | |
| Ex. 9 | 100 | 2.0 | - | - | 1.0 | |
| Ex. 10 | 100 | 0.5 | - | - | 1.0 | |
| Ex. 11 | 100 | 2.0 | - | - | 1.0 | |

[Table 2]

| | CURRENT COLLECTOR COATING LAYER | POSITIVE ELECTRODE ACTIVE MATERIAL LAYER | | | | | | AMOUT OF CONDUCTIVE CARBON / POSITIVE ELECTRODE EXCLUDING CURRENT COLLECTOR MAIN BODY | 1000 CYCLE CAPACITY RETENTION (25°C·3C RATE) |
|---|---|---|---|---|---|---|---|---|---|
| | | PORE SPECIFIC SURFACE AREA | CENTRAL PORE DIAMETER (D50) | AMOUNT OF CONDUCTIVE CARBON | COATING AMONT (DOUBLE -SIDED TOTAL) | THICKNESS (DOUBLE -SIDED TOTAL) | VOLUME DENSITY | | |
| UNIT | - | m$^2$/g | $\mu$m | % BY MASS | mg/cm$^2$ | $\mu$m | g/cm$^3$ | % BY MASS | % |
| Ex. 1 | PRESENT | 7.9 | 0.064 | 1.5 | 25. 0 | 102.0 | 2. 45 | 1.6 | 94 |
| Ex. 2 | | 8.0 | 0.080 | 1.5 | 25. 0 | 106.5 | 2. 35 | 1.6 | 94 |
| Ex. 3 | | 7. 8 | 0.110 | 1.5 | 25. 0 | 122.0 | 2.05 | 1.6 | 90 |
| Ex. 4 | | 7. 1 | 0.091 | 3.0 | 25.4 | 115.5 | 2. 20 | 3. 1 | 93 |
| Ex. 5 | | 8.2 | 0.108 | 3.0 | 25.4 | 115.5 | 2.20 | 3.1 | 93 |
| Ex. 6 | ABSENT | 8.4 | 0.111 | 3.0 | 25.4 | 115.5 | 2. 20 | 3.0 | 90 |
| Ex. 7 | PRESENT | 6.5 | 0.105 | 4.5 | 25.8 | 117.0 | 2. 20 | 4.6 | 82 |
| Ex. 8 | | 7. 6 | 0.061 | 1.0 | 24. 7 | 98.5 | 2.50 | 1.1 | 95 |
| Ex. 9 | PRESENT | 11.2 | 0.057 | 3.0 | 25.4 | 121.0 | 2. 10 | 3. 1 | 73 |
| Ex. 10 | | 14.6 | 0.051 | 1.5 | 25.0 | 119.0 | 2. 10 | 1.5 | 54 |
| Ex. 11 | | 10.3 | 0. 065 | 3.0 | 25.4 | 127.0 | 2.00 | 3. 1 | 45 |

EP 4 085 486 B1

As shown in the results of Table 2, Examples A1 to A7, in which the pore specific surface area of the positive electrode active material layer is 5.0 to 10.0 m$^2$/g and the central pore diameter of the positive electrode active material layer is 0.06 to 0.15 $\mu$m, showed excellent performance in the high-rate charge/discharge cycling.

In Example A1, it was presumed that deterioration was suppressed since there were few conductive carbons, the pore specific surface area was small, and there were few side reaction sites where current was locally concentrated during the high-rate charge/discharge cycling. It was also presumed that the large pore diameter to the extent that the positive electrode active material can sufficiently react with the electrolytic solution also contributed to the improvement of the performance.

In Example A2, the volume density was lowered as compared with Example A1 to change the pore specific surface area and the central pore diameter. The same effect as in Example A1 was obtained.

In Example A3, the volume density was further lowered as compared with Example A2. The capacity retention was slightly lower than that of Examples A1 and A2, but was good.

Graphite used as the conducting agent in Example A4 had a particle size close to that of the carbon-coated active material, and had a smaller specific surface area than the specific surface area of the conducting agent used in Examples A1 to A3. The same effect as in Examples A1 to A3 was obtained by increasing the blending amount of the conducting agent more than in Examples A1 to A3.

In Example A5, graphite and CNT were used as the conducting agent. The same effect as in Example A4 was obtained.

In Example A6, the aluminum foil not coated with the current collector coating layer was used, and the same conducting agent as in Example A5 was used. The capacity retention was slightly lower than that of Example A5, but was good.

In Example A7, more graphite was blended than in Example A4. The volume density was the same as that of Example A4, but the amount of the conductive carbon was higher than that of Example A4, and the capacity retention was slightly lower than that of Example A4.

In Example A8, unlike Examples A1 to A7, no conducting agent was used. The values of the pore specific surface area and the central pore diameter became smaller, the volume density could be adjusted high, and the capacity retention was further improved.

Example A9 was a comparative example in which the pore specific surface area was larger than the range of the present invention, the central pore diameter was smaller than the range of the present invention, and the high-rate cycling performance was inferior.

In this example, the amount of the conducting agent (carbon black) having a large specific surface area and a small particle size was larger than that of Examples A1 to A3. As a result, it was presumed that the current was locally concentrated on the conducting agent having a large specific area in the positive electrode, and the side reaction between the conducting agent and the electrolytic solution increased. Further, it was presumed that the amount of electrolytic solution injected into the pores decreased since the central pore diameter was small, so that the contact between the positive electrode active material and the electrolytic solution became insufficient during charging and discharging, the resistance increased, and the side reaction due to heat generation also increased. Further, it was presumed that the volume density was difficult to increase due to the large amount of the conducting agent having a small specific gravity, and the formation of the conductive path by the contact between the active materials was insufficient.

Example A10 was a comparative example in which the pore specific surface area was larger than the range of the present invention and the central pore diameter was smaller than the range of the present invention since the particle size of carbon black in the positive electrode composition is smaller than that of Example A1, so that high-rate cycling performance was inferior.

Example A11 was a comparative example in which the volume density of the positive electrode was smaller than that of Example A9, the pore specific surface area was larger than the range of the present invention, and the high-rate cycling performance was inferior to that of Example A9. It was presumed that the contact between the active materials became weak and the conductive path became worse than that of Example A9.

<Measurement method in Examples B1, B2 both being not part of the invention and Comparative Example>

(Spectral reflectance measuring method)

(Measurement conditions)

Measuring device: Spectrophotometer U-4100 (with a 5° specular reflection accessory) manufactured by Hitachi, Ltd
Light source: Deuterium lamp for radiation in the ultraviolet range and 50 W halogen lamp for radiation in the visible/near infrared range

Detector: Photomultiplier tube for detection in the ultraviolet/visible range and cooling type PbS for detection in the near infrared range

Measurement range: 200 nm-850 nm

Sample size: 15 mm x 15 mm

(Measurement of spectral reflectance)

The spectral reflectance of the surface of the positive electrode active material layer was measured with respect to the positive electrode which was in a completely discharged state. Alternatively, the positive electrode was discharged to 2.0 V vs Li/Li$^+$

The reflectance of only the conductive carbon material was evaluated by measuring the reflectance of the thin film obtained by a method in which a slurry obtained by mixing 100 parts by mass of carbon black, 40 parts by mass of polyvinylidene fluoride as a binder, and N-methylpyrrolidone (NMP) as a solvent was applied to the aluminum foil (thickness 15 μm) which is the positive electrode current collector main body, followed by drying. The amount of NMP used was the amount required for applying the slurry.

The surface reflection of the positive electrode active material layer is affected by the surface roughness; however, in general, the surface of the electrode is smoothed by being pressed, so that the influence of diffused reflection is suppressed to a low level. Further, in this measurement, the incident angle is set to 5° and is almost vertical, so that the reflectance peculiar to the material can be stably measured.

Further, when the thickness of the positive electrode active material layer is less than several μm, the reflected light from the positive electrode current collector main body may be included. However, in the present invention, the surface reflection of the positive electrode active material layer reflects only the spectrum of the reflected light from the surface of the positive electrode active material layer since the positive electrode, which includes the positive electrode active material layer having a thickness of 10 μm or more, is the measurement target.

<Production Example 2: Production of negative electrode>

100 parts by mass of artificial graphite as a negative electrode active material, 1.5 parts by mass of styrene-butadiene rubber as a binder, 1.5 parts by mass of carboxymethyl cellulose Na as a thickener, and water as a solvent were mixed, to thereby obtain a negative electrode composition having a solid content of 50 % by mass.

The obtained negative electrode composition was applied onto both sides of a copper foil (thickness 8 μm) and vacuum dried at 100 °C. Then, the resulting was pressure-pressed under a load of 2 kN to obtain a negative electrode sheet. The obtained negative electrode sheet was punched into an electrode shape of 42 mm x 42 mm to obtain a negative electrode.

(Example B1 not being part of the invention)

A carbon-coated lithium iron phosphate (hereinbelow, also referred to as "carbon-coated active material") with an average particle size of 1.0 μm was used as a positive electrode active material. The carbon coating amount was 1.0% by mass.

A conducting agent was not used.

First, a positive electrode current collector was prepared by coating both the front and back surfaces of a positive electrode current collector main body with current collector coating layers by the following method. An aluminum foil (thickness 15 μm) was used as the positive electrode current collector main body.

Next, a positive electrode active material layer was formed by the following method.

100 parts by mass of carbon-coated active material, 0.5 parts by mass of polyvinylidene fluoride as a binder, and NMP as a solvent were mixed with a mixer to obtain a positive electrode composition. The amount of the solvent used was the amount required for applying the positive electrode composition.

The positive electrode composition was applied on both sides of the positive electrode current collector, and after pre-drying, the applied composition was vacuum-dried at 120 °C to form positive electrode active material layers, each having a thickness of 70 μm.

The resulting laminate was pressure-pressed with a load of 10 kN to obtain a positive electrode sheet.

The obtained positive electrode sheet was punched into an electrode shape of 40 mm × 40 mm to obtain a positive electrode.

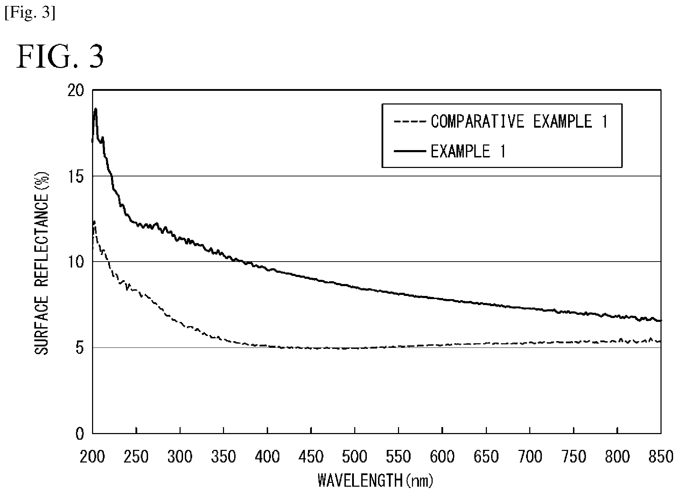

The spectral reflectance of the surface of the positive electrode active material layer of the obtained positive electrode was measured. The results are shown in FIG. 3. From the results shown in FIG. 3, the reflectance was 6.5 % or more in the wavelength range of 200 nm to 850 nm. The reflectance was 11 % in the wavelength range of 250 nm to 300 nm, which was reflected the reflection spectrum peculiar to lithium iron phosphate contained in the positive electrode active material layer. Further, the reflectance was 8.9 % or more in the wavelength range of 400 nm to 450 nm due to the small amount of carbon black. The longer the wavelength, the lower the reflectance tended to be observed, and the reflectance was 6.6 % at 850 nm. Further, the reflectance of the surface of the positive electrode active material layer was not higher than the reflectance in the wavelength range of 200 nm to 850 nm peculiar to the positive electrode active material (lithium iron phosphate) contained in the positive electrode active material layer.

When the amount of reflected light of only the conducting agent (carbon black) was measured, the reflectance was 3% to 5% in the wavelength range of 200 nm to 300 nm, and the reflectance was 3% or less in the wavelength range of 300 nm to 850 nm. It was found that carbon black had a very large light absorption as compared with the positive electrode active material layer in this example. It was presumed that the reflection peculiar to lithium iron phosphate particles was observed on the surface of the positive electrode active material layer, and a state in which there were few materials that did not contribute to lithium conduction could be realized, due to the small amount of carbon black added.

A non-aqueous electrolyte secondary battery having a configuration shown in FIG. 2 was manufactured by the following method.

$LiPF_6$ as an electrolyte was dissolved at 1 mol/L in a solvent in which ethylene carbonate (EC), propylene carbonate (PC) and diethyl carbonate (DEC) were mixed at a volume ratio, EC : PC : DEC of 30 : 5 : 65, to thereby prepare a non-aqueous electrolytic solution.

The positive electrode obtained in this example and the negative electrode obtained in Production Example 1 were alternately interleaved through a separator to prepare an electrode layered body with its outermost layer being the negative electrode. A polyolefin film (thickness 15 μm) was used as the separator.

In the step of producing the electrode layered body, the separator and the positive electrode were first stacked, and then the negative electrode was stacked on the separator.

Terminal tabs are electrically connected to the exposed section of the positive electrode current collector and the exposed section of the negative electrode current collector in the electrode layered body, and the electrode layered body was put between aluminum laminate films while allowing the terminal tabs to protrude to the outside. Then, the resulting was laminate-processed and sealed at three sides.

To the resulting structure, a non-aqueous electrolytic solution was injected from one side left unsealed, and this one side was vacuum-sealed to manufacture a non-aqueous electrolyte secondary battery (laminate cell). The capacity of the obtained non-aqueous electrolyte secondary battery was 1.0 Ah.

The obtained non-aqueous electrolyte secondary battery was fully charged (100 % SOC) at 25 °C, and then discharged at 1C from the fully charged state at -30 °C. The potential was observed 30 seconds after the start of discharge (equivalent to 8 mAh).

As a result, the potential of the non-aqueous electrolyte secondary battery of this example was 2.52 V. The potential of the battery module obtained by connecting four cells (non-aqueous electrolyte secondary batteries) in series was 10.08 V, which satisfied the cold cranking performance required for lead storage battery applications.

Further, for the non-aqueous electrolyte secondary battery of this example, a charge/discharge cycle with 1C rate charge/1 C rate discharge as one cycle was repeated 1000 times at 40 °C. After that, the non-aqueous electrolyte secondary battery was fully charged (100% SOC) at 25 °C, and then discharged at 1 C from the fully charged state at -30 °C. The potential 30 seconds after the start of discharge was 2.45 V. The potential of the battery obtained by connecting four cells (non-aqueous electrolyte secondary batteries) in series was 9.8 V, which satisfied the cold cranking performance required for lead storage battery applications.

These results are shown in Table 3. In Table 2, Example 1 is Example B1 and Example 2 is Example B2. The denominator for the amount of carbon in Table 3 is the mass of the positive electrode excluding the positive electrode current collector main body.

(Example B2 not being part of the invention)

The positive electrode of Example B2 was prepared in the same manner as in Example B1 except that 1.0 part by mass of carbon black as a conducting agent was added.

The spectral reflectance of the surface of the positive electrode active material layer of the obtained positive electrode was measured. As a result, the reflectance was 6.2 % or more in the wavelength range of 200 nm to 850 nm. The reflectance was 9.5 % in the wavelength range of 250 nm to 300 nm, which was reflected the reflection spectrum peculiar to lithium iron phosphate contained in the positive electrode active material layer. Further, the reflectance was 8.9 % or more in the wavelength range of 400 nm to 450 nm. Further, the reflectance of the surface of the positive electrode active material layer was not higher than the reflectance in the wavelength range of 200 nm to 850 nm peculiar to the positive electrode active material (lithium iron phosphate) contained in the positive electrode active material layer. It was presumed that the reason why the reflectance was lower than that of Example B1 was that a small amount of carbon black was added.

The non-aqueous electrolyte secondary battery (laminate cell) was produced using the obtained positive electrode. The capacity of the obtained non-aqueous electrolyte secondary battery was 1.0 Ah.

The obtained non-aqueous electrolyte secondary battery was fully charged (100 % SOC) at 25 °C, and then discharged at 1C from the fully charged state at -30 °C. When the potential was observed 30 seconds after the start of discharge (equivalent to 8 mAh), the potential was 2.5 V. It was presumed that the reason why the potential was slightly lower than that of Example B1 was that the lithium conduction path was slightly obstructed due to the inclusion of the small amount of carbon clack.

Further, for the non-aqueous electrolyte secondary battery of this example, a charge/discharge cycle with 1 C rate charge/1 C rate discharge as one cycle was repeated 1000 times at 40 °C. After that, the non-aqueous electrolyte secondary battery was fully charged (100% SOC) at 25 °C, and then discharged at 1 C from the fully charged state at -30 °C. The potential 30 seconds after the start of discharge was 2.35 V. The potential of the battery module obtained by connecting four cells (non-aqueous electrolyte secondary batteries) in series was 9.4 V, which satisfied the cold cranking performance required for lead storage battery applications.

These results are shown in Table 3.

Similar to Example B1, the longer the wavelength, the lower the reflectance tended to be observed, and the reflectance was 6.2% at 850 nm.

(Comparative Example)

The positive electrode of Comparative Example was prepared in the same manner as in Example B1 except that 5.0 part by mass of carbon black as a conducting agent was added.

The spectral reflectance of the surface of the positive electrode active material layer of the obtained positive electrode was measured. The results are shown in FIG. 3. As a result, the reflectance was 5.0 % in the wavelength range of 200 nm to 850 nm. The reflectance was 6.2 % in the wavelength range of 250 nm to 300 nm, which was reflected the reflection spectrum peculiar to lithium iron phosphate contained in the positive electrode active material layer. Further, the reflectance was 5.0 % or more in the wavelength range of 400 nm to 450 nm. The reason why the reflectance is lower than that of Examples B1 and B2 is that the amount of carbon black added is large. Due to the influence of carbon black, the reflectance at the wavelength of 410 nm was the minimum value, the reflectance was 5.0 % at the wavelength of 410 nm, the reflectance was 10.5 % at the wavelength of 200 nm, and the reflectance was 5.3 % at the wavelength of 850 nm.

The non-aqueous electrolyte secondary battery (laminate cell) was produced using the obtained positive electrode. The capacity of the obtained non-aqueous electrolyte secondary battery was 1.0 Ah.

The obtained non-aqueous electrolyte secondary battery was fully charged (100 % SOC) at 25 °C, and then discharged at 1C from the fully charged state at -30 °C. When the potential was observed 30 seconds after the start of discharge (equivalent to 8 mAh), the potential was 2.4 V. It was presumed that the reason why the potential was further lowered as compared with Example B2 was that the lithium conduction path was obstructed to the extent where the battery performance was greatly affected by the large amount of carbon black added.

Further, for the non-aqueous electrolyte secondary battery of this example, a charge/discharge cycle with 1 C rate charge/1C rate discharge as one cycle was repeated 1000 times at 40 °C. After that, the non-aqueous electrolyte secondary battery was fully charged (100% SOC) at 25 °C, and then discharged at 1 C from the fully charged state at -30 °C. The potential 30 seconds after the start of discharge was 1.8 V. The potential of the battery module obtained by connecting four cells (non-aqueous electrolyte secondary batteries) in series was 7.4 V, which did not satisfy the cold cranking performance required for lead storage battery applications. It was presumed that the increase in resistance and the decrease in potential after the cycle were due to a side reaction caused by carbon black. It was found that when the amount of carbon black added was large and the reflectance of the surface of the positive electrode active material layer was low, the deterioration of the battery performance was large.

These results are shown in Table 3.

[Table 3]

| | AMOUNT OF CARBON [% BY MASS] | MINIMUM REFLECTANCE IN THE WAVELENGTH RANGE OF 200 TO 850 nm [%] | MINIMUM REFLECTANCE IN THE WAVELENGTH RANGE OF 250 TO 300 nm [%] | MINIMUM REFLECTANCE IN THE WAVELENGTH RANGE OF 400 TO 450 nm [%] | POTENTIAL AFTER DISCHARGING 1Ah CELL FROM 100% SOC AT -30°C FOR 30 SECONDS (8mAh) AT 1C [V] | POTENTIAL OBTAINED BY CONNECTING FOUR CELLS ON THE LEFT IN SERIES [V] | POTENTIAL AFTER DISCHARGING FROM 100% SOC AT -30°C FOR 30 SECONDS (8mAh) AT 1C AFTER 500 CYCLE AT 40°C [V] | POTENTIAL OBTAINED BY CONNECTING FOUR CELLS ON THE LEFT IN SERIES [V] |
|---|---|---|---|---|---|---|---|---|
| Ex. 1 | 1 | 6.5 | 11.0 | 8.9 | 2.52 | 10.08 | 2.45 | 9. 80 |
| Ex. 2 | 2 | 6. 2 | 9.5 | 8.2 | 2.50 | 10.00 | 2. 35 | 9.40 |
| Comp. Ex. 1 | 6 | 5.0 | 6. 2 | 5. 0 | 2.40 | 9. 60 | 1. 80 | 7. 20 |

**Reference Signs List**

1     Positive electrode
2     Separator
3     Negative electrode
5     Outer casing
10    Secondary battery
11    Positive electrode current collector
12    Positive electrode active material layer
13    Exposed section of positive electrode current collector
14    Positive electrode current collector main body
15    Current collector coating layer
31    Negative electrode current collector
32    Negative electrode active material layer
33    Exposed section of negative electrode current collector

**Claims**

1. A positive electrode for a non-aqueous electrolyte secondary battery, comprising: a positive electrode current collector comprising a positive electrode current collector main body formed of a metal material; a positive electrode active material layer provided on the positive electrode current collector, wherein

   the positive electrode active material layer comprises positive electrode active material particles having, on at least a part of their surfaces, a coated section comprising a conductive carbon,
   the positive electrode active material layer has a conductive carbon content of 0.5 to 3.0 % by mass, based on a total mass of the positive electrode active material layer,
   the positive electrode active material layer has a pore specific surface area of 5.0 to 10.0 $m^2$/g and a central pore diameter of 0.06 to 0.15 $\mu$m, wherein the pore specific surface area and the central pore diameter of the positive electrode active material layer are values measured by the mercury intrusion method utilizing the procedures and equipment as described in the description, and the central pore diameter is calculated as a median diameter (D50, unit: $\mu$m) in the range of the pore diameter of 0.003 to 1.000 $\mu$m in the pore diameter distribution,

   wherein a volume density of the positive electrode active material layer is 2.05 to 2.80 $g/cm^3$, as measured by the method described in the description.

2. The positive electrode according to Claim 1, wherein a positive electrode active material in the positive electrode active material particles comprises a compound represented by a formula $LiFe_xM_{(1-x)}PO_4$, wherein $0 \leqq x \leqq 1$, M is Co, Ni, Mn, Al, Ti, or Zr.

3. The positive electrode according to Claim 2, wherein the positive electrode active material is lithium iron phosphate represented by $LiFePO_4$.

4. The positive electrode according to any one of Claims 1 to 3, wherein the positive electrode active material layer further comprises a conducting agent which is distinguishable from the conductive carbon present in the coated section by the method described in the description.

5. The positive electrode according to Claim 4, wherein the conducting agent comprises carbon.

6. The positive electrode according to any one of Claims 1 to 3, wherein the positive electrode active material layer does not comprise a conducting agent.

7. The positive electrode according to any one of claims 1 to 6, wherein a current collector coating layer is present on a surface of the positive electrode current collector on a side of the positive electrode active material layer.

8. The positive electrode according to Claim 7, wherein the current collector coating layer comprises carbon.

9. The positive electrode according to Claim8, wherein an amount of a conductive carbon is 0.5 to 3.5% by mass with respect to a mass of the positive electrode excluding the positive electrode current collector main body.

10. A non-aqueous electrolyte secondary battery, comprising the positive electrode according to any one of Claims 1 to 9, a negative electrode, and a non-aqueous electrolyte disposed between the positive electrode and the negative electrode.

11. A battery module or a battery system comprising a plurality of the non-aqueous electrolyte secondary batteries according to Claim 10.

**Patentansprüche**

1. Positive Elektrode für eine Sekundärbatterie mit nichtwässrigem Elektrolyten, umfassend: einen Stromkollektor der positiven Elektrode, umfassend einen Hauptkörper des Stromkollektors der positiven Elektrode, der aus einem metallischen Material gebildet ist; eine aktive Materialschicht der positiven Elektrode, die auf dem Stromkollektor der positive Elektrode vorgesehen ist, wobei

   die aktive Materialschicht der positiven Elektrode Teilchen aus aktivem Material für die positive Elektrode umfasst, die auf mindestens einem Teil ihrer Oberflächen einen beschichteten Abschnitt aufweisen, der einen leitfähigen Kohlenstoff umfasst,
   die aktive Materialschicht der positiven Elektrode einen Gehalt an leitfähigem Kohlenstoff von 0,5 bis 3,0 Masse-%, bezogen auf die Gesamtmasse der aktiven Materialschicht der positiven Elektrode, aufweist,
   die aktive Materialschicht der positiven Elektrode eine porenspezifische Oberfläche von 5,0 bis 10,0 $m^2/g$ und einen zentralen Porendurchmesser von 0,06 bis 0,15 $\mu$m aufweist, wobei die porenspezifische Oberfläche und der zentrale Porendurchmesser der aktiven Materialschicht der positiven Elektrode Werte sind, die durch das Quecksilberintrusionsverfahren unter Verwendung der in der Beschreibung beschriebenen Verfahren und Ausrüstung gemessen werden, und der zentrale Porendurchmesser als ein mittlerer Durchmesser (D50, Einheit: $\mu$m) im Bereich des Porendurchmessers von 0,003 bis 1,000 $\mu$m in der Porendurchmesserverteilung berechnet wird,
   wobei die Volumendichte der aktiven Materialschicht der positiven Elektrode 2,05 bis 2,80 $g/cm^3$ beträgt, gemessen nach dem in der Beschreibung beschriebenen Verfahren.

2. Positive Elektrode nach Anspruch 1, wobei ein aktives Material der positiven Elektrode in den Teilchen aus aktivem Material für die positive Elektrode eine Verbindung, dargestellt durch die Formel $LiFe_xM_{(1-x)}PO_4$, umfasst, wobei $0 \leqq x \leqq 1$, M Co, Ni, Mn, Al, Ti oder Zr ist.

3. Positive Elektrode nach Anspruch 2, wobei das aktive Material der positiven Elektrode Lithiumeisenphosphat, dargestellt durch $LiFePO_4$, ist.

4. Positive Elektrode nach einem der Ansprüche 1 bis 3, wobei die aktive Materialschicht der positiven Elektrode ferner ein Leitmittel umfasst, das durch das in der Beschreibung beschriebene Verfahren von dem in dem beschichteten Abschnitt vorhandenen leitfähigen Kohlenstoff unterscheidbar ist.

5. Positive Elektrode nach Anspruch 4, wobei das Leitmittel Kohlenstoff umfasst.

6. Positive Elektrode nach einem der Ansprüche 1 bis 3, wobei die aktive Materialschicht der positiven Elektrode kein Leitmittel umfasst.

7. Positive Elektrode nach einem der Ansprüche 1 bis 6, wobei eine Stromkollektor-Beschichtungsschicht auf einer Oberfläche des Stromkollektors der positiven Elektrode auf einer Seite der aktiven Materialschicht der positiven Elektrode vorhanden ist.

8. Positive Elektrode nach Anspruch 7, wobei die Stromkollektor-Beschichtungsschicht Kohlenstoff umfasst.

9. Positive Elektrode nach Anspruch 8, wobei die Menge an leitfähigem Kohlenstoff 0,5 bis 3,5 Masse-%, bezogen auf die Masse der positiven Elektrode ohne den Hauptkörper des Stromkollektors der positiven Elektrode, beträgt.

10. Sekundärbatterie mit nichtwässrigem Elektrolyten, umfassend die positive Elektrode nach einem der Ansprüche 1 bis 9, eine negative Elektrode und einen nichtwässrigen Elektrolyten, der zwischen der positiven Elektrode und der negativen Elektrode angeordnet ist.

11. Batteriemodul oder Batteriesystem mit einer Vielzahl von Sekundärbatterien mit nichtwässrigem Elektrolyten nach Anspruch 10.


**Revendications**

1. Électrode positive pour une batterie secondaire à électrolyte non aqueux comportant : un collecteur de courant d'électrode positive comportant un corps principal de collecteur de courant d'électrode positive formé d'un matériau métallique ; une couche de matière active d'électrode positive disposée sur le collecteur de courant d'électrode positive, dans laquelle

   la couche de matière active d'électrode positive comporte des particules de matière active d'électrode positive ayant, sur au moins une partie de leurs surfaces, une section revêtue comportant un carbone conducteur,
   la couche de matière active d'électrode positive a une teneur en carbone conducteur de 0,5 à 3,0 % en masse, sur la base d'une masse totale de la couche de matière active d'électrode positive,
   la couche de matière active d'électrode positive a une surface spécifique de pores de 5,0 à 10,0 $m^2/g$ et un diamètre de pores central de 0,06 à 0,15 $\mu m$, dans laquelle la surface spécifique de pores et le diamètre de pores central de la couche de matière active d'électrode positive sont des valeurs mesurées par le procédé à intrusion de mercure utilisant les procédures et l'équipement tels que décrits dans la description, et le diamètre de pores central est calculé comme un diamètre médian (D50, unité : $\mu m$) dans l'intervalle du diamètre de pores de 0,003 à 1,000 $\mu m$ dans la distribution de diamètre de pores,
   dans laquelle une densité volumique de la couche de matière active d'électrode positive est de 2,05 à 2,80 $g/cm^3$, lorsqu'elle est mesurée par le procédé décrit dans la description.

2. Électrode positive selon la revendication 1, dans laquelle une matière active d'électrode positive dans les particules de matière active d'électrode positive comporte un composé représenté par une formule $LiFe_xM_{(1-x)}PO_4$, dans laquelle $0 \leqq x \leqq 1$, M est Co, Ni, Mn, Al, Ti ou Zr.

3. Électrode positive selon la revendication 2, dans laquelle la matière active d'électrode positive est le phosphate de fer au lithium représenté par $LiFePO_4$.

4. Électrode positive selon l'une quelconque des revendications 1 à 3, dans laquelle la couche de matière active d'électrode positive comporte en outre un agent de conduction qui peut être distingué du carbone conducteur présent dans la section revêtue, par le procédé décrit dans la description.

5. Électrode positive selon la revendication 4, dans laquelle l'agent de conduction comporte du carbone.

6. Électrode positive selon l'une quelconque des revendications 1 à 3, dans laquelle la couche de matière active d'électrode positive ne comporte pas un agent de conduction.

7. Électrode positive selon l'une quelconque des revendications 1 à 6, dans laquelle une couche de revêtement de collecteur de courant est présente sur une surface du collecteur de courant d'électrode positive sur un côté de la couche de matière active d'électrode positive.

8. Électrode positive selon la revendication 7, dans laquelle la couche de revêtement de collecteur de courant comporte du carbone.

9. Électrode positive selon la revendication 8, dans laquelle une quantité d'un carbone conducteur est de 0,5 à 3,5 % en masse par rapport à une masse de l'électrode positive à l'exclusion du corps principal de collecteur de courant d'électrode positive.

10. Batterie secondaire à électrolyte non aqueux, comportant l'électrode positive selon l'une quelconque des revendications 1 à 9, une électrode négative et un électrolyte non aqueux disposé entre l'électrode positive et l'électrode négative.

11. Module de batterie ou système de batteries comportant une pluralité des batteries secondaires à électrolyte non aqueux selon la revendication 10.

[Fig. 1]

# FIG. 1

[Fig. 2]

FIG. 2

[Fig. 3]

# FIG. 3

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2021045804 A
- JP 2021046025 A
- CN 105518909 B
- EP 3540827 A1
- JP 2014013748 A
- JP 2007525354 A
- JP 5098146 B

### Non-patent literature cited in the description

- **I.BELHAROUAK** ; **C.JOHNSON** ; **K.AMINE**. Synthesis and electrochemical analysis of vapor-deposited carbon-coated LiFePO4. *Electrochemistry Communications*, October 2005, vol. 7 (10), 983-988
- **GS YUASA**. *Technical Report*, 2008, vol. 5 (1), 27-31
- Toray Research Center. *The TRC News*, September 2013 (117), 34-37, https://www.toray-research.co.jp/technical-info/trcnews/pdf/TRC117(34-37).pdf
- Technical Report. TOSOH Analysis and Research Center Co., Ltd., 10 February 2021